# EUROPEAN PATENT APPLICATION

(11) **EP 4 694 460 A1**
(43) Date of publication of application: **11.02.2026**
(21) Application number: 24788226.9
(22) Date of filing: 12.04.2024
(51) Int. Cl.: H04W 72/0453

(54) **COMMUNICATION METHOD AND COMMUNICATION APPARATUS**

(30) Priority: 14.04.2023 CN 202310417633
(71) Applicant: Huawei Technologies Co., Ltd., Shenzhen, Guangdong 518129 (CN)
(72) Inventor: ZHANG, Lili, Shenzhen, Guangdong 518129 (CN); LUO, Qingquan, Shenzhen, Guangdong 518129 (CN); LONG, Yi, Shenzhen, Guangdong 518129 (CN); FAN, Ming, Shenzhen, Guangdong 518129 (CN)
(74) Representative: Pfenning, Meinig & Partner mbB
(86) International application number: PCT/CN2024/087557
(87) International publication number: WO 2024/213130

(57) **Abstract**

This application provides a communication method and a communication apparatus. The method includes: When switching from M frequency domain resources to N frequency domain resources, the communication apparatus determines, from the M frequency domain resources and the N frequency domain resources, a frequency domain resource on which a switching period is located. M and N are positive integers and a sum of M and N is greater than 2. The switching period is a time period for switching from the M frequency domain resources to the N frequency domain resources. Optionally, the method further includes: The communication apparatus switches from the M frequency domain resources to the N frequency domain resources within the switching period. According to the solution provided in this application, effectiveness of determining the frequency domain resource on which the switching period is located can be improved, thereby improving spectrum utilization.

## Description

### CROSS-REFERENCE TO RELATED APPLICATIONS

This application claims priority to Chinese Patent Application No. 202310417633.1, filed with the China National Intellectual Property Administration on April 14, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a current flexible spectrum access technology, a user equipment (user equipment, UE) may dynamically switch, based on band load, a band used for uplink transmission between a plurality of bands (bands), so that uplink resources are more fully used, and uplink communication quality is improved.

Currently, when the UE dynamically switches between different bands, a radio frequency of the UE needs to be interrupted for a switching period (switching period) to ensure that the UE can switch to another band. It may also be understood as that, due to a capability limitation of the UE, the UE needs a specific time period (namely, the switching period) to complete switching from one band to another band. In addition, the UE further needs to know a specific switching period location (switching period location), to be specific, a specific band on which a switching gap is located. When the switching period is located on a switch-from band, the UE interrupts information transmission on a switch-from frequency domain resource. Within an interruption time period (namely, the switching period), the UE completes tuning (tuning) or retuning (retuning) of a radio frequency (radio frequency, RF) chain, to switch to another band. When the switching period is located on a switch-to band, the UE interrupts information transmission on a switch-to frequency domain resource. Within an interruption time period, the UE completes tuning or retuning of a radio frequency chain, to complete band switching.

Currently, when the UE switches between two bands (that is, switches from one band to another band), as specified in a related technical standard, the UE may determine that the switching period is on the switch-from band or the switch-to band other than a band having a highest priority. However, when the UE switches across more bands (that is, switches from a plurality of bands to one or more bands or switches from one band to a plurality of bands), according to the method specified in the foregoing technical standard, the UE can determine, in some specific scenarios, a band on which the switching period is located, but cannot determine, in some other specific scenarios (for example, a scenario in which the switch-from band and the switch-to band include a same band and a priority of the band is the highest), a band on which the switching period is located. As a result, spectrum resource utilization is reduced.

### SUMMARY

This application provides a communication method and a communication apparatus, to improve effectiveness of determining a frequency domain resource on which a switching period is located, thereby improving spectrum utilization.

According to a first aspect, an embodiment of this application provides a communication method. The method may be performed by a terminal device or a network device, or may be performed by a component (for example, a processor, a chip, or a chip system) in the terminal device or the network device. The method includes: when switching from M frequency domain resources to N frequency domain resources, determining, from the M frequency domain resources and the N frequency domain resources, a frequency domain resource on which a switching period is located, where M and N are positive integers and a sum of M and N is greater than 2, and the switching period is a time period for switching from the M frequency domain resources to the N frequency domain resources, where the frequency domain resource on which the switching period is located satisfies at least one of the following: The frequency domain resource on which the switching period is located is a frequency domain resource that has no highest priority in frequency domain resources other than a first frequency domain resource in the M frequency domain resources and the N frequency domain resources, the frequency domain resource on which the switching period is located is the M frequency domain resources or the N frequency domain resources, the first frequency domain resource is a frequency domain resource included in the M frequency domain resources, and the first frequency domain resource is a frequency domain resource included in the N frequency domain resources; the frequency domain resource on which the switching period is located is a frequency domain resource that has no highest priority in frequency domain resources belonging to a first specified type in the M frequency domain resources and the N frequency domain resources, and the frequency domain resource on which the switching period is located is the M frequency domain resources or the N frequency domain resources; the frequency domain resource on which the switching period is located is the M frequency domain resources or the N frequency domain resources, where the M frequency domain resources include the first frequency domain resource, and the N frequency domain resources include the first frequency domain resource; and the frequency domain resource on which the switching period is located is a frequency domain resource, other than a frequency domain resource on which a physical uplink control channel is located, in the M frequency domain resources or the N frequency domain resources.

The method provides a plurality of methods for determining a switching period location, to help the communication apparatus effectively determine the switching period location in more frequency domain resource switching scenarios, so as to improve effectiveness of determining the frequency domain resource on which the switching period is located, reduce a waste of spectrum resources, and improve spectrum resource utilization. For example, in a scenario in which a same frequency domain resource exists before and after switching and a priority of the same frequency domain resource is the highest, the switching period location cannot be determined based on an existing solution, but the switching period location can be effectively determined based on the solution provided in the foregoing embodiment.

In the foregoing method, the M frequency domain resources are switch-from frequency domain resources, that is, switch-from frequency domain resources or switch from frequency domain resources or switching from the frequency domain resources, and the N frequency domain resources are switch-to frequency domain resources, that is, switch-to frequency domain resources or switch to frequency domain resources or switching to the frequency domain resources. The frequency domain resource on which the switching period is located is the M frequency domain resources, that is, the frequency domain resource on which the switching period is located is the switch-from frequency domain resources. The frequency domain resource on which the switching period is located is the N frequency domain resources, that is, the frequency domain resource on which the switching period is located is the switch-to frequency domain resources. The frequency domain resource belonging to the first specified type may also be understood as a frequency domain resource of the first specified type. The highest priority may be understood as a high priority, and a lowest priority may be understood as a low priority.

In the foregoing method, that the frequency domain resource on which the switching period is located is the M frequency domain resources may be understood as at least one of the following: The frequency domain resource on which the switching period is located belongs to the M frequency domain resources; the frequency domain resource on which the switching period is located is included in/is included in the M frequency domain resources; the frequency domain resource on which the switching period is located is the switch-from frequency domain resources; and the frequency domain resource on which the switching period is located belongs to the switch-from frequency domain resources. That the frequency domain resource on which the switching period is located is the N frequency domain resources may be understood as at least one of the following: The frequency domain resource on which the switching period is located belongs to the N frequency domain resources; the frequency domain resource on which the switching period is located is included in/is included in the N frequency domain resources; the frequency domain resource on which the switching period is located is the switch-to frequency domain resources; and the frequency domain resource on which the switching period is located belongs to the switch-to frequency domain resources.

In the foregoing method, the frequency domain resource having no highest priority may be understood as a frequency domain resource having a lowest priority. That is, when the frequency domain resource on which the switching period is located is determined, the switch-from frequency domain resource or the switch-to frequency domain resource on which the frequency domain resource having the highest priority is located is excluded. This may also be understood as: When the frequency domain resource on which the switching period is located is determined, the switch-from frequency domain resource or the switch-to frequency domain resource on which the frequency domain resource having the lowest priority is located is set as the frequency domain resource on which the switching period is located.

In a possible design, the first specified type includes at least one of the following: Uplink transmission is scheduled, and uplink transmission is performed on a frequency domain resource at a specified location in a scheduled frequency domain resource; a physical uplink control channel does not exist/is not included; and no associated band is included.

In a scenario in which the switch-from frequency domain resource and the switch-to frequency domain resource include the frequency domain resource of the first specified type, the frequency domain resource on which the switching period is located may not be determined based on the existing solution, or when frequency domain resource switching is performed based on the existing solution, uplink communication quality is greatly affected. Therefore, in the foregoing solution of this application, a corresponding solution for determining the frequency domain resource on which the switching period is located is configured for the scenario, so that the frequency domain resource on which the switching period is located can be determined more efficiently, thereby implementing frequency domain resource switching more efficiently, and reducing impact on uplink communication quality as much as possible.

In a possible design, the M frequency domain resources are switch-from frequency domain resources, and the N frequency domain resources are switch-to frequency domain resources; that the frequency domain resource on which the switching period is located is the M frequency domain resources is specifically: The frequency domain resource on which the switching period is located is the switch-from frequency domain resources; and that the frequency domain resource on which the switching period is located is the N frequency domain resources is specifically: The frequency domain resource on which the switching period is located is the switch-to frequency domain resources.

In a possible design, when the frequency domain resource on which the switching period is located is the switch-to frequency domain resources, a priority of information carried on the first frequency domain resource in the M frequency domain resources is higher than a priority of information carried on the first frequency domain resource in the N frequency domain resources; or when the frequency domain resource on which the switching period is located is the switch-from frequency domain resources, a priority of information carried on the first frequency domain resource in the N frequency domain resources is higher than a priority of information carried on the first frequency domain resource in the M frequency domain resources.

In this method, the frequency domain resource on which the switching period is located is, before and after switching, a frequency domain resource (the switch-from frequency domain resource or the switch-to frequency domain resource) on which the first frequency domain resource that carries information having a low priority is located. This can ensure that uplink transmission corresponding to information having a high priority is not affected by frequency domain resource switching. In other words, it is ensured that execution of a communication service having a high priority is not affected.

In a possible design, if the frequency domain resource on which the physical uplink control channel is located belongs to the M frequency domain resources, the frequency domain resource on which the switching period is located is the N frequency domain resources; or if the frequency domain resource on which the physical uplink control channel is located belongs to the N frequency domain resources, the frequency domain resource on which the switching period is located is the M frequency domain resources.

In this method, the switch-from frequency domain resource or the switch-to frequency domain resource that does not include the physical uplink control channel is used as the frequency domain resource on which the switching period is located, so that interference or impact caused by a frequency domain resource switching process on transmission of the physical uplink control channel can be avoided, and communication quality of the physical uplink control channel is ensured when frequency domain resource switching is performed.

In a possible design, that the frequency domain resource on which the switching period is located is the M frequency domain resources or the N frequency domain resources specifically includes: If a quantity of uplink transmission chains or a quantity of scheduled ports on the M frequency domain resources is less than a quantity of uplink transmission chains or a quantity of scheduled ports on the N frequency domain resources, the frequency domain resource on which the switching period is located is the M frequency domain resources; or if a quantity of uplink transmission chains or a quantity of scheduled ports on the N frequency domain resources is less than a quantity of uplink transmission chains or a quantity of scheduled ports on the M frequency domain resources, the frequency domain resource on which the switching period is located is the N frequency domain resources.

In this method, the switch-from frequency domain resource or the switch-to frequency domain resource on which the quantity of uplink transmission chains or the quantity of scheduled ports is small is used as the frequency domain resource on which the switching period is located, so that impact of a frequency domain resource switching process on uplink transmission can be reduced as much as possible.

In a possible design, that the frequency domain resource on which the switching period is located is the M frequency domain resources or the N frequency domain resources specifically includes: If a quantity of uplink transmission chains or a quantity of scheduled ports on a frequency domain resource other than the first frequency domain resource in the M frequency domain resources is less than a quantity of uplink transmission chains or a quantity of scheduled ports on a frequency domain resource other than the first frequency domain resource in the N frequency domain resources, the frequency domain resource on which the switching period is located is the M frequency domain resources; or if a quantity of uplink transmission chains or a quantity of scheduled ports on a frequency domain resource other than the first frequency domain resource in the N frequency domain resources is less than a quantity of uplink transmission chains or a quantity of scheduled ports on a frequency domain resource other than the first frequency domain resource in the M frequency domain resources, the frequency domain resource on which the switching period is located is the N frequency domain resources.

In this method, the switch-from frequency domain resource or the switch-to frequency domain resource, other than the first frequency domain resource, on which the quantity of uplink transmission chains or the quantity of scheduled ports is small is used as the frequency domain resource on which the switching period is located, so that transmission of the switch-from frequency domain resource or the switch-to frequency domain resource that has a larger transmission requirement can be avoided from being affected, and impact of a frequency domain resource switching process on uplink transmission can be reduced as much as possible.

In a possible design, in the M frequency domain resources and the N frequency domain resources, a priority of the first frequency domain resource is higher than a priority of another frequency domain resource.

In this scenario, the first frequency domain resource has a highest priority. In a scenario in which the first frequency domain resource belongs to both the switch-from frequency domain resource and the switch-to frequency domain resource, and the priority of the first frequency domain resource is the highest, the frequency domain resource on which the switching period is located can be effectively determined based on the foregoing method, to ensure smooth execution of frequency domain resource switching.

In a possible design, when a second frequency domain resource is in an in-band carrier aggregation state, the second frequency domain resource is configured with no associated band, or an associated band of the second frequency domain resource is not used, where the second frequency domain resource belongs to the M frequency domain resources or the N frequency domain resources.

When the second band is configured with the associated band and the associated band is used, there may be a case in which the uplink transmission chain exists on the associated band of the second band but valid content is actually not sent. In this case, the associated band may be switched in the frequency domain resource switching process. However, because the associated band carries no valid information, such switching is actually unnecessary. Therefore, the associated band of the second frequency domain resource is not configured or is not used, so that unnecessary switching related to the associated band can be avoided in the frequency domain resource switching scenario, to reduce a waste of spectrum resources and improve spectrum resource utilization.

In a possible design, uplink transmission on two carriers in the second frequency domain resource is transmission corresponding to one uplink transmission chain or transmission on one port.

In a possible design, if a quantity of uplink transmission chains or a quantity of scheduled ports on a third frequency domain resource changes during switching from the M frequency domain resources to the N frequency domain resources, switching of the third frequency domain resource is not performed or there is no switching period on the third frequency domain resource, where the third frequency domain resource belongs to the M frequency domain resources and/or the N frequency domain resources. That there is no switching period on the third frequency domain resource may also be understood as: On the third frequency domain resource, the communication apparatus does not perform frequency domain resource switching, or does not interrupt information transmission. The information transmission includes at least one of data information transmission, control information transmission, or reference signal transmission. Optionally, the information transmission may be at least one of uplink data information transmission, control information transmission, or reference signal transmission. Optionally, the information transmission may alternatively be at least one of downlink data information transmission, control information transmission, or reference signal transmission.

In the foregoing method, if the quantity of uplink transmission chains or the quantity of scheduled ports on the third frequency domain resource changes during switching from the M frequency domain resources to the N frequency domain resources, and if frequency domain resource switching needs to be performed on the third frequency domain resource, the to-be-performed frequency domain resource switching belongs to frequency domain resource switching between carriers on a same frequency domain resource, namely, the third frequency domain resource. Such switching actually does not need the switching period. Therefore, if the quantity of uplink transmission chains or the quantity of scheduled ports on the third frequency domain resource changes during switching from the M frequency domain resources to the N frequency domain resources, frequency domain resource switching based on the switching period may not be performed, or it is considered that there is no switching period on the third frequency domain resource. This can avoid carrier interruption on the same frequency domain resource, to reduce a waste of spectrum resources and improve spectrum resource utilization.

In a possible design, when one port is scheduled on the third frequency domain resource for transmission, and there is no other scheduled frequency domain resource, the third frequency domain resource is configured with no associated band, or an associated band of the third frequency domain resource is not used.

In the foregoing method, the associated band of the third frequency domain resource is not configured or is not used, so that unnecessary switching related to the associated band can be avoided in the frequency domain resource switching scenario, to reduce a waste of spectrum resources and improve spectrum resource utilization.

According to a second aspect, an embodiment of this application provides a communication method. The method may be performed by a terminal device or a network device, or may be performed by a component (for example, a processor, a chip, or a chip system) in the terminal device or the network device. The method includes: When a first frequency domain resource is in an in-band carrier aggregation state, the first frequency domain resource is configured with no associated band, or an associated band of the first frequency domain resource is not used.

When the first band is configured with the associated band and the associated band is used, there may be a case in which an uplink transmission chain exists on the associated band of the first band but valid content is actually not sent. In this case, the associated band may be switched in a frequency domain resource switching process. However, because the associated band carries no valid information, such switching is actually unnecessary. Therefore, the associated band of the first frequency domain resource is not configured or is not used, so that unnecessary switching related to the associated band can be avoided in the frequency domain resource switching scenario, to reduce a waste of spectrum resources and improve spectrum resource utilization.

In a possible design, uplink transmission on two carriers in the first frequency domain resource is transmission corresponding to one uplink transmission chain or transmission on one port.

According to a third aspect, an embodiment of this application provides a communication apparatus. The communication apparatus may be a terminal device or a network device, or may be an apparatus (for example, a chip, a chip system, or a circuit) in the terminal device or the network device. The communication apparatus includes a processing unit and a storage unit. The storage unit is configured to store program instructions that can be executed by the processing unit or store data. The processing unit is configured to: when switching from M frequency domain resources to N frequency domain resources, determine, from the M frequency domain resources and the N frequency domain resources, a frequency domain resource on which a switching period is located, where M and N are positive integers and a sum of M and N is greater than 2, and the switching period is a time period for switching from the M frequency domain resources to the N frequency domain resources, where the frequency domain resource on which the switching period is located satisfies at least one of the following: The frequency domain resource on which the switching period is located is a frequency domain resource that has no highest priority in frequency domain resources other than a first frequency domain resource in the M frequency domain resources and the N frequency domain resources, the frequency domain resource on which the switching period is located is the M frequency domain resources or the N frequency domain resources, the first frequency domain resource is a frequency domain resource included in the M frequency domain resources, and the first frequency domain resource is a frequency domain resource included in the N frequency domain resources; the frequency domain resource on which the switching period is located is a frequency domain resource that has no highest priority in frequency domain resources belonging to a first specified type in the M frequency domain resources and the N frequency domain resources, and the frequency domain resource on which the switching period is located is the M frequency domain resources or the N frequency domain resources; the frequency domain resource on which the switching period is located is the M frequency domain resources or the N frequency domain resources, where the M frequency domain resources include the first frequency domain resource, and the N frequency domain resources include the first frequency domain resource; and the frequency domain resource on which the switching period is located is a frequency domain resource, other than a frequency domain resource on which a physical uplink control channel is located, in the M frequency domain resources or the N frequency domain resources.

The M frequency domain resources are switch-from frequency domain resources, that is, switch-from frequency domain resources or switch from frequency domain resources or switching from the frequency domain resources, and the N frequency domain resources are switch-to frequency domain resources, that is, switch-to frequency domain resources or switch to frequency domain resources or switching to the frequency domain resources. The frequency domain resource on which the switching period is located is the M frequency domain resources, that is, the frequency domain resource on which the switching period is located is the switch-from frequency domain resources. The frequency domain resource on which the switching period is located is the N frequency domain resources, that is, the frequency domain resource on which the switching period is located is the switch-to frequency domain resources. The frequency domain resource belonging to the first specified type may also be understood as a frequency domain resource of the first specified type. The highest priority may be understood as a high priority, and a lowest priority may be understood as a low priority.

That the frequency domain resource on which the switching period is located is the M frequency domain resources may be understood as at least one of the following: The frequency domain resource on which the switching period is located belongs to the M frequency domain resources; the frequency domain resource on which the switching period is located is included in/is included in the M frequency domain resources; the frequency domain resource on which the switching period is located is the switch-from frequency domain resources; and the frequency domain resource on which the switching period is located belongs to the switch-from frequency domain resources. That the frequency domain resource on which the switching period is located is the N frequency domain resources may be understood as at least one of the following: The frequency domain resource on which the switching period is located belongs to the N frequency domain resources; the frequency domain resource on which the switching period is located is included in/is included in the N frequency domain resources; the frequency domain resource on which the switching period is located is the switch-to frequency domain resources; and the frequency domain resource on which the switching period is located belongs to the switch-to frequency domain resources.

The frequency domain resource having no highest priority may be understood as a frequency domain resource having a lowest priority. That is, when the frequency domain resource on which the switching period is located is determined, the switch-from frequency domain resource or the switch-to frequency domain resource on which the frequency domain resource having the highest priority is located is excluded. This may also be understood as: When the frequency domain resource on which the switching period is located is determined, the switch-from frequency domain resource or the switch-to frequency domain resource on which the frequency domain resource having the lowest priority is located is set as the frequency domain resource on which the switching period is located.

In a possible design, the first specified type includes at least one of the following: Uplink transmission is scheduled, and uplink transmission is performed on a frequency domain resource at a specified location in a scheduled frequency domain resource; a physical uplink control channel does not exist/is not included; and no associated band is included.

In a possible design, the M frequency domain resources are switch-from frequency domain resources, and the N frequency domain resources are switch-to frequency domain resources; that the frequency domain resource on which the switching period is located is the M frequency domain resources is specifically: The frequency domain resource on which the switching period is located is the switch-from frequency domain resources; and that the frequency domain resource on which the switching period is located is the N frequency domain resources is specifically: The frequency domain resource on which the switching period is located is the switch-to frequency domain resources.

In a possible design, when the frequency domain resource on which the switching period is located is the switch-to frequency domain resources, a priority of information carried on the first frequency domain resource in the M frequency domain resources is higher than a priority of information carried on the first frequency domain resource in the N frequency domain resources; or when the frequency domain resource on which the switching period is located is the switch-from frequency domain resources, a priority of information carried on the first frequency domain resource in the N frequency domain resources is higher than a priority of information carried on the first frequency domain resource in the M frequency domain resources.

In a possible design, if the frequency domain resource on which the physical uplink control channel is located belongs to the M frequency domain resources, the frequency domain resource on which the switching period is located is the N frequency domain resources; or if the frequency domain resource on which the physical uplink control channel is located belongs to the N frequency domain resources, the frequency domain resource on which the switching period is located is the M frequency domain resources.

In a possible design, that the frequency domain resource on which the switching period is located is the M frequency domain resources or the N frequency domain resources specifically includes: If a quantity of uplink transmission chains or a quantity of scheduled ports on the M frequency domain resources is less than a quantity of uplink transmission chains or a quantity of scheduled ports on the N frequency domain resources, the frequency domain resource on which the switching period is located is the M frequency domain resources; or if a quantity of uplink transmission chains or a quantity of scheduled ports on the N frequency domain resources is less than a quantity of uplink transmission chains or a quantity of scheduled ports on the M frequency domain resources, the frequency domain resource on which the switching period is located is the N frequency domain resources.

In a possible design, that the frequency domain resource on which the switching period is located is the M frequency domain resources or the N frequency domain resources specifically includes: If a quantity of uplink transmission chains or a quantity of scheduled ports on a frequency domain resource other than the first frequency domain resource in the M frequency domain resources is less than a quantity of uplink transmission chains or a quantity of scheduled ports on a frequency domain resource other than the first frequency domain resource in the N frequency domain resources, the frequency domain resource on which the switching period is located is the M frequency domain resources; or if a quantity of uplink transmission chains or a quantity of scheduled ports on a frequency domain resource other than the first frequency domain resource in the N frequency domain resources is less than a quantity of uplink transmission chains or a quantity of scheduled ports on a frequency domain resource other than the first frequency domain resource in the M frequency domain resources, the frequency domain resource on which the switching period is located is the N frequency domain resources.

In a possible design, in the M frequency domain resources and the N frequency domain resources, a priority of the first frequency domain resource is higher than a priority of another frequency domain resource.

In a possible design, when a second frequency domain resource is in an in-band carrier aggregation state, the second frequency domain resource is configured with no associated band, or an associated band of the second frequency domain resource is not used, where the second frequency domain resource belongs to the M frequency domain resources or the N frequency domain resources.

In a possible design, uplink transmission on two carriers in the second frequency domain resource is transmission corresponding to one uplink transmission chain or transmission on one port.

In a possible design, if a quantity of uplink transmission chains or a quantity of scheduled ports on a third frequency domain resource changes during switching from the M frequency domain resources to the N frequency domain resources, switching of the third frequency domain resource is not performed or there is no switching period on the third frequency domain resource, where the third frequency domain resource belongs to the M frequency domain resources and/or the N frequency domain resources. That there is no switching period on the third frequency domain resource may also be understood as: On the third frequency domain resource, the communication apparatus does not perform frequency domain resource switching, or does not interrupt information transmission. The information transmission includes at least one of data information transmission, control information transmission, or reference signal transmission. Optionally, the information transmission may be at least one of uplink data information transmission, control information transmission, or reference signal transmission. Optionally, the information transmission may alternatively be at least one of downlink data information transmission, control information transmission, or reference signal transmission.

In a possible design, when one port is scheduled on the third frequency domain resource for transmission, and there is no other scheduled frequency domain resource, the third frequency domain resource is configured with no associated band, or an associated band of the third frequency domain resource is not used.

According to a fourth aspect, an embodiment of this application provides a communication apparatus. The communication apparatus may be a terminal device or a network device, or may be an apparatus (for example, a chip, a chip system, or a circuit) in the terminal device or the network device. The communication apparatus includes a processing unit and a storage unit. The storage unit is configured to store program instructions that can be executed by the processing unit or store data. The processing unit is configured to: when a first frequency domain resource is in an in-band carrier aggregation state, skip configuring or using an associated band of the first frequency domain resource. That is, when the first frequency domain resource is in the in-band carrier aggregation state, the first frequency domain resource is configured with no associated band, or the associated band of the first frequency domain resource is not used.

In a possible design, uplink transmission on two carriers in the first frequency domain resource is transmission corresponding to one uplink transmission chain or transmission on one port.

According to a fifth aspect, an embodiment of this application provides a communication apparatus, including at least one processor; and a memory and a communication interface that are communicatively connected to the at least one processor, where
the communication interface is configured to: receive a signal from another communication apparatus other than the communication apparatus and transmit the signal to the processor, or send a signal from the processor to another communication apparatus other than the communication apparatus; and
the memory stores instructions that can be executed by the at least one processor, and the at least one processor executes the instructions stored in the memory, to enable the communication apparatus to perform the first aspect or any method in the first aspect, or perform the second aspect or any method in the second aspect.

According to a sixth aspect, an embodiment of this application provides a communication system, where the communication system includes a terminal device configured to perform the first aspect or any method in the first aspect. Optionally, the communication system further includes a network device configured to perform the first aspect or any method in the first aspect.

According to a seventh aspect, this application provides a computer-readable storage medium, where the computer-readable storage medium stores a computer program or instructions. When the computer program or the instructions are run on a communication apparatus, the communication apparatus is enabled to perform the first aspect or any method in the first aspect; or perform the second aspect or any method in the second aspect.

According to an eighth aspect, this application provides a computer program product. The computer program product includes a computer program or instructions. When the computer program or the instructions are executed by a communication apparatus, the first aspect or any method in the first aspect is implemented; or the second aspect or any method in the second aspect is implemented.

According to a ninth aspect, this application provides a chip system, where the chip system includes a processor, and the processor is coupled to a memory, and is configured to read and execute a software program stored in the memory, to implement the first aspect or any method in the first aspect, or implement the second aspect or any method in the second aspect.

For technical effects that can be achieved in any one of the third aspect to the ninth aspect, refer to descriptions of beneficial effects in the first aspect or the second aspect. Details are not described herein again.

### BRIEF DESCRIPTION OF DRAWINGS

FIG. 1a is a diagram of a band multiplexing scenario;
FIG. 1b is a diagram of a band multiplexing scenario;
FIG. 2 is a diagram of a band multiplexing scenario;
FIG. 3 is a diagram of an architecture of a communication system;
FIG. 4 is a diagram of a band switching scenario;
FIG. 5 is a diagram of an architecture of a communication system;
FIG. 6 is a diagram of a communication method according to an embodiment of this application;
FIG. 7 is a diagram of a band switching scenario according to an embodiment of this application;
FIG. 8 is a diagram of a band switching scenario according to an embodiment of this application;
FIG. 9 is a diagram of a band switching scenario according to an embodiment of this application;
FIG. 10 is a diagram of a band switching scenario according to an embodiment of this application;
FIG. 11 is a diagram of a band switching scenario according to an embodiment of this application;
FIG. 12 is a diagram of a communication apparatus according to an embodiment of this application; and
FIG. 13 is a diagram of a structure of a communication apparatus according to an embodiment of this application.

### DESCRIPTION OF EMBODIMENTS

The following describes in detail embodiments of this application with reference to accompanying drawings.

A method and a device are based on a same technical concept. Because problem-resolving principles of the method and the device are similar, mutual reference may be made to implementations of the device and the method, and repeated parts are not described again.

In the following, some terms in this application are described, to help a person skilled in the art have a better understanding.
(1) A terminal device is an entity configured to receive or transmit a signal on a user side, and has a wireless transceiver function. Optionally, the terminal device includes a device that provides voice and/or data connectivity for a user. The terminal device may also be referred to as a user equipment (user equipment, UE), a mobile station (mobile station, MS), a mobile terminal (mobile terminal, MT), or the like. For ease of description, an example in which the terminal device is the UE is used for description in embodiments of this application.
   For example, the terminal device may be a hand-held device having a wireless connection function or a processing device connected to a wireless modem. The terminal device may exchange voice and/or data with a RAN. The terminal device may include a V2X terminal device, a wireless terminal device, a mobile terminal device, a device-to-device (device-to-device, D2D) communication terminal device, a machine-to-machine/machine-type communication (machine-to-machine/machine-type communication, M2M/MTC) terminal device, an internet of things (internet of things, IoT) terminal device, a virtual reality (virtual reality, VR) device, an augmented reality (augmented reality, AR) device, an industrial control (industrial control) device, a self-driving (self-driving) device, a remote medical (remote medical) device, a smart grid (smart grid) device, a smart home device, a smart office device, a smart transportation device, a drone, a robot, an access point (access point, AP), a remote terminal (remote terminal), an access terminal (access terminal), a user agent (user agent), a user device (user device), a wearable device, a vehicle-mounted device, or the like.
(2) A network device is an entity configured to transmit and/or receive a signal on a network side, and may be used as a device that connects a terminal device to a wireless network in a communication system. As a node in a radio access network, the network device may also be referred to as a base station, or may be referred to as a radio access network (radio access network, RAN) device or a radio access network node.
   For example, the radio access network device includes but is not limited to a base station (base transceiver station (base transceiver station, BTS)), a NodeB (NodeB), an evolved NodeB (evolved NodeB, eNodeB/eNB), a gNodeB/gNB, a transmission reception point (transmission reception point, TRP), an evolved base station after the 3rd generation partnership project (3rd generation partnership project, 3GPP), a radio network controller (radio network controller, RNC), an access point (access point, AP), a base station controller (base station controller, BSC), a home base station (for example, a home evolved NodeB or a home NodeB, HNB), an access node in a baseband unit (baseband unit, BBU) or a wireless fidelity (wireless fidelity, Wi-Fi) system, a wireless relay node, or a wireless backhaul node. The base station may be a macro base station, a micro base station, a pico base station, a small cell, a relay station, any other radio access device, a base station in next-generation communication, or the like. A plurality of base stations may support networks using a same access technology, or may support networks using different access technologies. The base station may include one or more co-site or non-co-site transmission reception points. For example, the radio access network device may alternatively be a radio controller, a central unit (central unit, CU), and/or a distributed unit (distributed unit, DU) in a cloud radio access network (cloud radio access network, CRAN) scenario. Alternatively, the radio access network device may be a server or the like. For example, a network device in a vehicle-to-everything (vehicle-to-everything, V2X) technology may be a roadside unit (roadside unit, RSU).
(3) A communication apparatus is an apparatus or a device that supports a wireless communication technology and that can communicate with another device. In embodiments of this application, a specific representation form of the communication apparatus is not limited. For example, the communication apparatus may be a terminal device, a network device, or the like.

It should be noted that, in this application, the term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. "At least one" means one or more. In addition, it should be understood that, in the descriptions of this application, terms such as "first" and "second" are merely used for distinguishing and description, and cannot be understood as an indication or implication of relative importance or an indication or implication of an order.

In a 5G NR system, power of uplink transmission of the terminal device is usually limited. Therefore, received signal strength of an uplink transmission signal may be insufficient to ensure coverage performance of the network device when the uplink transmission signal reaches the network device (for example, the base station). In addition, uplink spectrum resources may be insufficient. Therefore, the uplink coverage performance of the network device cannot be ensured by relying on retransmission of data by the terminal device. Currently, a supplementary uplink (supplementary UL, SUL) is introduced in the NR system to serve as a candidate when uplink coverage in the NR system is insufficient. Because a low band of LTE usually has better coverage performance, for the SUL, it is considered that a carrier is selected from a low band (for example, a band of 700 MHz/800 MHz, a band of 1.8 GHz, or a band of 2.1 GHz) of the LTE to complete the uplink transmission in the NR system. Based on this, when performing transmission of uplink data on an NR band (normal UL, NUL), the terminal device may select, based on a channel condition, the carrier from the low band of the LTE for the NR uplink transmission. Switching between the NUL and the SUL may be referred to as switching between two bands (bands). Currently, when performing NR transmission by using an LTE band, the terminal device may multiplex the LTE band with uplink transmission time division duplex (time division duplex, TDD) in an LTE system.

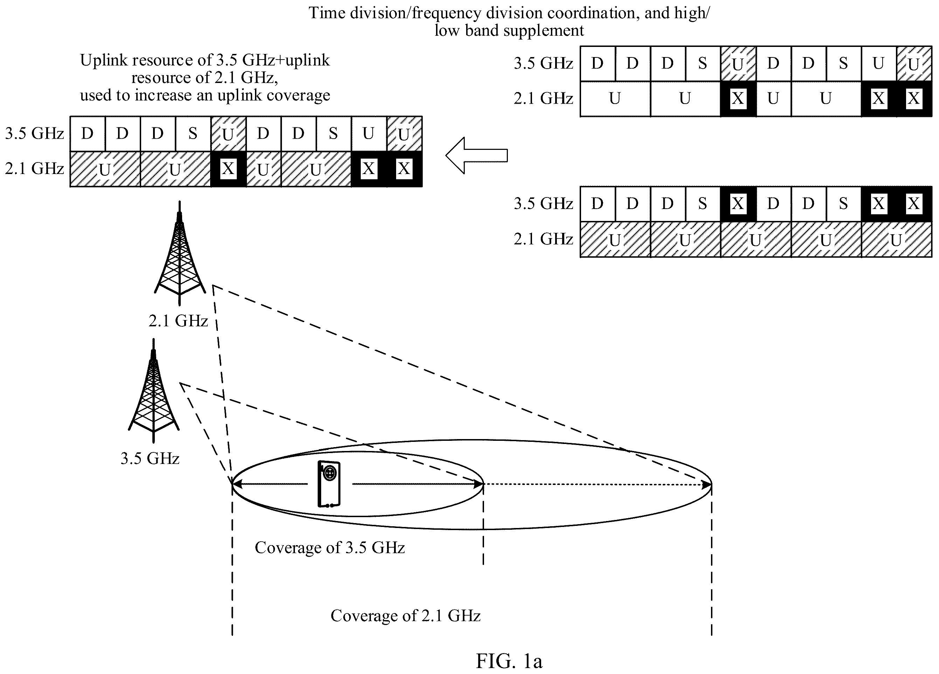

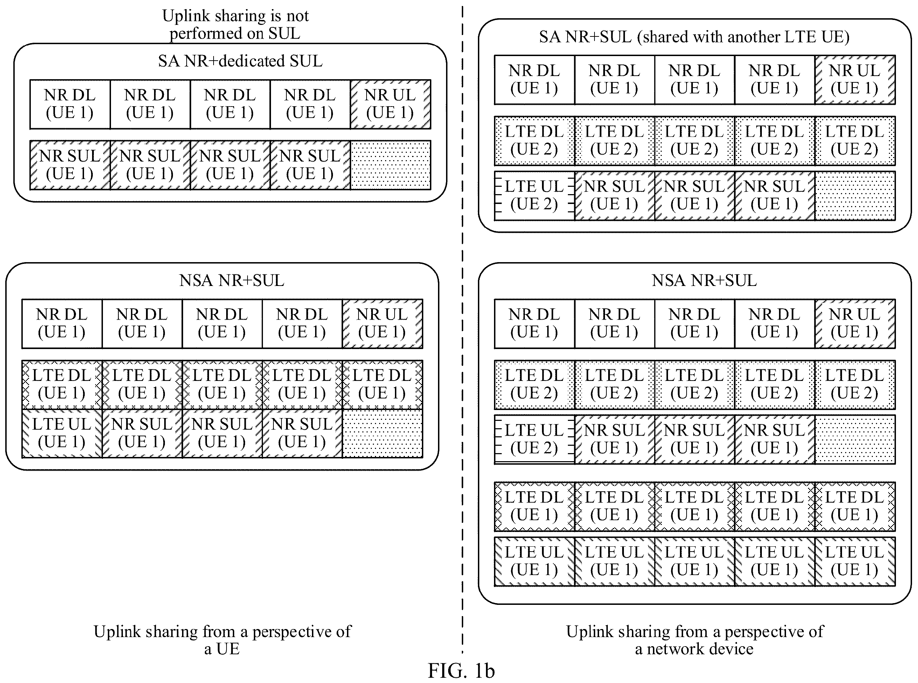

For example, as shown in FIG. 1a, the terminal device may perform uplink transmission in a time division multiplexing manner on a band of 3.5 GHz (belonging to the NR band) and a band of 2.1 GHz (belonging to the LTE band) that are provided by the network device, so that uplink transmission quality of the terminal device can be improved. The LTE band of 2.1 GHz is supplemented, so that a coverage of the network device is increased, thereby helping improve coverage performance of the network device. For another example, as shown in FIG. 1b, in standalone or non-standalone networking, the network device may provide the NR band and the SUL band, and the terminal device may multiplex an NR uplink and an SUL link for uplink transmission.

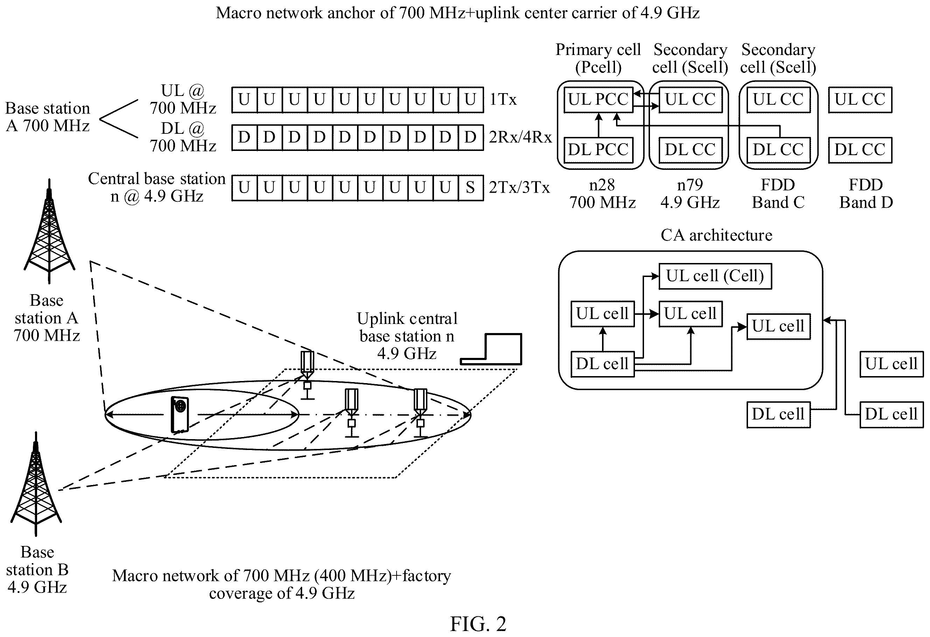

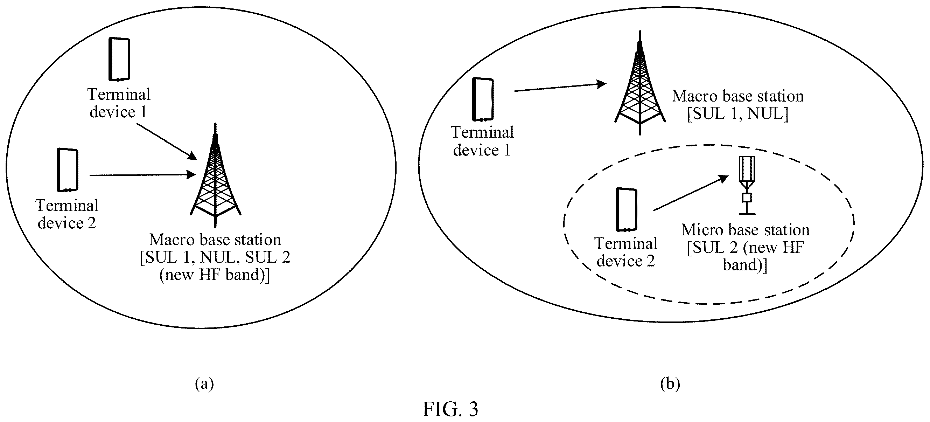

In addition, currently, a new band of 4.9 GHz has a prospect of being used. The band provides a spectrum resource with a higher bandwidth, and can provide more sufficient uplink resources. Therefore, it may be considered to perform expansion of uplink coverage on the band. For example, as shown in FIG. 2, both the band and a band of 700 MHz may be used as the SUL band, so that the band and the band of 700 MHz form an SUL 2 band. Therefore, an uplink coverage can be further expanded. The band of 4.9 GHz may be used in a co-sited or inter-sited manner. As shown in a diagram (a) in FIG. 3, co-site means that a new high frequency spectrum of 4.9 GHz is added to a macro (macro) base station. As shown in a diagram (b) in FIG. 3, inter-site means that a new high frequency spectrum of 4.9 GHz (for example, a case of factory coverage) is used on a micro base station (small cell TP).

Regardless of the co-site or the inter-site in the foregoing diagrams, the UE is expected to perform dynamic switching across a plurality of bands such as 700 MHz/800 MHz/900 MHz, 1.8 GHz, 2.1 GHz, 3.5 GHz, and 4.9 GHz based on a channel status and a load status of a corresponding band. This is a current flexible spectrum access technology.

Dynamic switching performed by the terminal device across the plurality of bands may be switching between two bands, or may be switching across three bands, switching across four bands, or switching across even more bands.

During dynamic switching between different bands, a radio frequency of the terminal device needs to be interrupted for duration corresponding to a switching period (switching period), to ensure that the terminal device is switched to another band. It may also be understood as that, due to a capability limitation of the terminal device, it takes time for the terminal device to perform band switching. Specifically, when switching is performed between two bands, across three bands, across four bands, or across more bands, the switching period is needed for the terminal device to switch from one band to another band. The switching period may also be referred to as switching duration (switching time), a switching gap (switching gap), and the like.

That a band is interrupted because the terminal device performs band switching may be referred to as that the switching period is configured on the band, that the switching period is located on the band, or the like. This is not specifically limited in embodiments of this application. A band or a carrier on which the switching period is located needs to be specified. Especially, when a switching period value reported by the terminal device is greater than a gap between two uplink transmissions scheduled by the network device, the terminal device needs to know a specific switching period location (switching period location). The switching period location is a location of the switching period, to be specific, a band or a carrier on which the switching period is located.

Currently, in a scenario of switching between two bands, a band switching manner is unique, that is, switching from one band to another band. The network device may configure a carrier index and indicate a switching period location through the carrier index. However, in a scenario of switching across three bands, switching across four bands, or switching across more bands, a band switching manner for implementing an effect of switching across three bands, four bands, or more bands is not unique, and different switching manners may correspond to different switching periods. Therefore, if the switching period is indicated through a carrier index in the method of switching between two bands, a switching period location corresponding to each possible switching manner needs to be indicated through the carrier index, which causes large signaling resource consumption. Therefore, a method for determining the switching period location by the terminal device in the scenario of switching between two bands is not applicable to the scenario of switching across three bands, switching across four bands, or switching across more bands.

Currently, the 3GPP protocol has a related specification on how the terminal device determines the switching period location. Specifically, the network device configures a priority for each band or carrier, and for a band (UL Tx switching band) related to one switching, the terminal device determines that the switching period location is a switch-from band (switching-from band(s)) or a switch-to band (switching-to band(s)) on which a band having a non-highest priority is located. In other words, if the switch-from band does not include a band having a highest priority, the switch-from band is used as a band on which the switching period is located; and if the switch-to band does not include the band having the highest priority, the switch-to band is used as the band on which the switching period is located. The network device may also determine the switching period location according to the rule, to obtain a result consistent with that of the terminal device. The foregoing method may be used by the terminal device and the network device to determine the switching period location in the scenario of switching across a plurality of bands.

The 3GPP protocol further specifies the following switching scenario in the switching across three bands or the switching across four bands: In a first time unit, there is one uplink transmission chain (referred to as 1T or 1Tx for short in embodiments of this application) on a band A and a band B separately. In a second time unit, one port (1 port) is scheduled for transmission on a band A and a band C separately, or one port is scheduled for transmission on a band B and a band C separately. The first time unit and the second time unit are adjacent time units. In this embodiment of this application, a time unit may be a slot (slot), a subframe (subframe), a mini-slot (mini-slot/sub-slot), a mini-subframe (mini-subframe), a symbol, or the like. In the foregoing switching scenario, the terminal device may switch from the band A and the band B to the band A and the band C, or to the band B and the band C. The first time unit may be understood as a last time unit before switching, and the second time unit may be understood as a 1^{st} time unit after switching.

A maximum of two uplink transmission chains (referred to as 2T or 2Tx for short in embodiments of this application) may simultaneously exist on one band, and two uplink transmission chains on one band may be on a same carrier or different carriers on the band. Transmission of two uplink transmission chains on one band may be performed through one port (1 port), or may be performed through two ports (2 port(s)). When transmission is performed through two ports, transmission performed through each port may correspond to one transmission chain.

In the conventional technology, when the network device indicates the UE to send uplink data, downlink control information (downlink control information, DCI) scheduling of the network device indicates only a port configuration (for example, a port quantity or a port number), but does not specify a transmission chain Tx. In other words, currently, the network device may schedule, through DCI, the terminal device to perform uplink transmission, and may indicate port information used by the terminal device during uplink transmission, but does not indicate a quantity of transmission chains used by the terminal device during uplink transmission. In embodiments of this application, specifying the transmission chain Tx may also be understood as specifying a quantity of uplink transmission chains or transmission times (for example, 1T or 1Tx may be referred to as one transmission, and 2T or 2Tx may be referred to as two transmissions) on a specific carrier. In practice, for one terminal device, 2Tx may be correspondingly performed on one port, or 1Tx may be correspondingly performed on one port.

It should be noted that, the uplink transmission chain described in embodiments of this application may also be referred to as a transmission chain (a transmission chain, a radio frequency chain, a transmit chain, or the like) for short. A name of the transmission chain is not specifically limited in embodiments of this application.

For ease of description, in embodiments of this application, one uplink transmission chain or transmission of one uplink radio frequency chain is referred to as 1T or 1Tx for short, two uplink transmission chains or transmission of two uplink radio frequency chains are referred to as 2T or 2Tx for short, and an uplink transmission chain or transmission of an uplink radio frequency chain is referred to as T or Tx for short.

The foregoing solution in which the terminal device determines the switching period location based on a priority of the band related to switching (that is, a band on which switching occurs) is simple to implement. However, a band on which the switching period is located can be selected in only some scenarios to obtain the switching period location, and the band on which the switching period is located cannot be selected in some other specific scenarios.

In addition, the 3GPP protocol further defines an associated band (associated band). Specifically, when two transmission chains of the terminal device are currently located on the band A and the band B respectively, and next uplink transmission is performed through one port on the band C, if the network device indicates 1T through radio resource control (radio resource control, RRC) signaling (for example, uplinkTxSwitching-DualUL-TxState), it indicates that the terminal device needs to perform transmission of one transmission chain on the band C through one port, and one transmission chain on the band A or the band B is switched to the band C. In this case, it is not clear whether the transmission chain on the band A or the band B is to be switched. Therefore, the associated band is defined in the 3GPP standard. That is, for any band, the network device may configure an associated band of the band through the RRC signaling. When the network device schedules one port on the band for transmission, if the network device indicates 1T through the RRC signaling, in addition to transmission of 1T through one port on the band, there is another 1T on the associated band of the band. Application in the foregoing scenario is that there is a transmission chain on the switch-to band C, and there is one transmission chain on an associated band of the band C.

Based on the foregoing solution, each band in switching across three bands, four bands, or more bands has a corresponding associated band. One of two transmission chains is on one band, and the other of the two transmission chains is always on an associated band of the band. For example, for a band A, a band B, a band C, and a band D, B may be configured as an associated band of A (which may be denoted as {B for A}), A may be configured as an associated band of B (which may be denoted as {A for B}), A may be configured as an associated band of C (which may be denoted as {A for C}), and C may be configured as an associated band of D (which may be denoted as {C for D}). When one port on the band C is scheduled for transmission, if the two transmission chains are currently located on the band A and the band B respectively, the transmission chain on the band B is switched to the band C. In addition, the band A is the associated band of the band C. Therefore, the transmission chain on the band A remains unchanged. In this way, after switching, one transmission chain is located on the scheduled band C, and the other transmission chain is located on the associated band of the band C, namely, the band A. When one port on the band D is scheduled for transmission, if the two transmission chains are currently located on the band A and the band B respectively, the transmission chain on the band A is switched to the band D, and the transmission chain on the band B is switched to the associated band of the band D, namely, the band C. Alternatively, the transmission chain on the band B is switched to the band D, and the transmission chain on the band A is switched to the associated band of the band D, namely, the band C. In this way, after switching, one transmission chain is located on the scheduled band D, and the other transmission chain is located on the associated band of the band D, namely, the band C.

A prerequisite for defining the associated band is that it is assumed that simultaneous transmission on two bands can be supported.

In the foregoing solution, when an associated band has a highest priority, if the switching period location is still determined based on a priority of a band related to switching, corresponding selection cannot be performed based on an actual priority of each band, which reduces spectrum efficiency.

The following further describes the foregoing problem with reference to specific examples.

Problem 1: When a switch-from band and a switch-to band include a same band and the same band is not only related to switching but also has a highest priority, how to determine the switching period location?

It should be noted that, in embodiments of this application, a band before switching may be referred to as a switch-from band (which may be referred to as switch from), and a band after switching may be referred to as a switch-to band (which may be referred to as switch to). In embodiments of this application, the band related to switching may be understood as a band on which switching occurs.

### Example 1

A scenario of switching across three bands may be: transmission of 1T on the band A and transmission of 1T on the band B are switched to transmission of 1T on the band B and transmission of 1T on the band C. In this scenario, the terminal device may perform the following switching operations.

Switching operation 1: The band B is not switched, and the band A is switched to the band C. When the terminal device has a low capability, although the band B is not switched, interruption needs to be performed for the switching period, to ensure that switching from the band A to the band C is successfully completed.

In this manner, bands related to switching include the band A, the band B, and the band C. When determining the switching period location, the terminal device needs to compare a priority of the band A, a priority of the band B, and a priority of the band C. In the three bands, when the priority of the band A is the highest, the band A is excluded according to the foregoing solution of determining the switching period location based on the priority of the band related to switching. The terminal device may determine that the switching period location is the switch-to band B and the switch-to band C. In this case, a terminal gap needs to be switched for using the switch-to band B and the switch-to band C. In the three bands, when the priority of the band C is the highest, the band C is excluded according to the foregoing solution of determining the switching period location based on the priority of the band related to switching. The terminal device may determine that the switching period location is the switch-from band A and the switch-from band B. In the three bands, when the priority of the band B is the highest, the band B is excluded according to the foregoing solution of determining the switching period location based on the priority of the band related to switching. Therefore, a switch-from band or a switch-to band on which the band B is located cannot be selected. In this case, the terminal device cannot obtain the switching period location, and similarly, the network device cannot determine the switching period location.

Switching operation 2: The band B is not switched, and the band A is switched to the band C. When the terminal device has a high capability, the terminal device can still successfully complete switching from the band A to the band C while interruption does not need to be performed for the switching period on the band B.

From a perspective of a switching scenario, in the foregoing switching scenario, the band A and the band B are switched to the band B and the band C, and it may be considered that the bands related to switching include the band A, the band B, and the band C. In addition, from a perspective of switching that is actually performed, in this manner, bands that are actually switched include the band A and the band C, and it may be considered that the bands related to switching include the band A and the band C. Specifically, whether the band A, the band B, and the band C are used as bands related to switching, or the band A and the band C are used as bands related to switching is not specified in a current related standard. Therefore, in this scenario, it is difficult for the terminal device and the network device to uniformly determine the bands related to switching, and it is more difficult to uniformly determine the switching period location.

Switching operation 3: The band A is switched to the band B, and the band B is switched to the band C.

In this manner, bands related to switching include the band A, the band B, and the band C. A solution for determining the switching period location is the same as the solution in the foregoing switching operation 1. When the priority of the band B is the highest, neither the terminal device nor the network device can determine the switching period location.

In conclusion, in the foregoing switching scenario, when the switch-from band and the switch-to band include a same band (namely, the band B), and the same band is not only related to switching, but also has the highest priority, neither the terminal device nor the network device can uniquely determine the switching period location. Therefore, the problem described in the foregoing problem 1 exists in the foregoing switching scenario.

Problem 2: When a switch-from band and a switch-to band include a same band, the same band is not only related to switching but also has the highest priority, and quantities of transmission chains on the same band before and after switching are different, how to determine the switching period location?

### Example 2

A band switching scenario may be: When the band B is an associated band of the band C, transmission of 1T on the band A and transmission of 1T on the band B are switched to transmission of 1T on the band C. Because the band B is the associated band of the band C, 1T also exists on the band B, but no content is sent in 1T on the band B actually. After switching is completed, the network device schedules transmission of 2T on the band C. In this case, the terminal device needs to switch from transmission of 1T on the band C and transmission of 1T (in which no content is sent actually) on the band B to transmission of 2T on the band C.

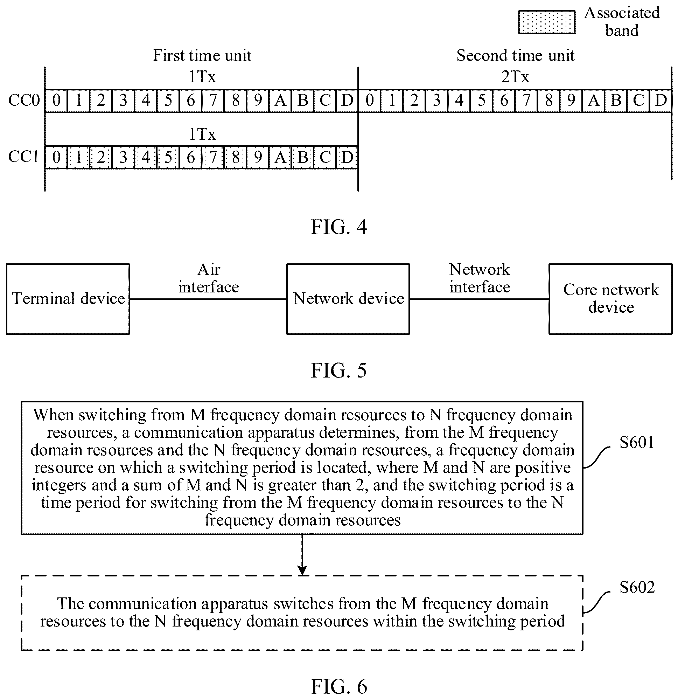

For example, as shown in FIG. 4, a carrier on the band C is denoted as CCO, and a carrier on the band B is denoted as CC1. After the band A and the band B are switched to the band C, when CC0 on the band C changes from being scheduled for 1T to being scheduled for 2T (in this case, transmission of 1T on the band C needs to be switched to transmission of 2T), the switching period actually may not be needed on the band C.

If the switching period needs to be reserved, a possible solution may be the foregoing solution of determining the switching period location based on the priority of the band related to switching. In this case, there are the following two possible cases.

Case 1: If a priority of CC1 is higher than that of CC0, a switch-from band (including switch-from CC0 and switch-from CC1) on which CC1 is located is excluded, and switch-to CC0 may be selected as the switching period location.

In this manner, when the associated band (the band on which CC1 is located, namely, the band B) has a high priority, if the foregoing solution of determining the switching period location based on the priority of the band related to switching is used, an actually scheduled high-priority band (for example, the band C) may be used as the switching period location, and consequently, the actually scheduled high-priority band is interrupted. Therefore, spectral efficiency is reduced.

Case 2: If a priority of CC0 is higher than that of CC1, both a switch-from band (including switch-from CC0 and switch-from CC1) on which CC0 is located and a switch-to band (including switch-to CC0) on which CC0 is located are excluded, and the switching period location cannot be determined.

Optionally, when the band B is not the associated band of the band C, but an actual band scheduled for 1T, the switching period location may also be determined in the foregoing manner.

If the switching period needs to be reserved, another possible solution may be: requiring that the associated band be excluded as the band related to switching. In this way, when CC1 belongs to the associated band, the band related to switching does not include CC1, and includes only CC0. Therefore, for determining the switching period location, CC cannot be used as a reference, and only CC0 can be used as a reference. However, both the switch-from band and the switch-to band are CCO. Therefore, a band used as the switching period location cannot be selected from the switch-from band and the switch-to band.

Further, the foregoing case may be understood as:
(1) Regardless of whether the band to which CC1 belongs is the associated band or an actually scheduled transmission band, when the priority of CC1 (that is, a priority of the band to which CC1 belongs) is higher than a priority of another carrier or band, the switching period location may be determined; and when the priority of CC1 is lower than the priority of the another carrier or band, the switching period location cannot be determined.
(2) When the associated band (for example, the band B to which CC1 belongs) belongs to the switch-from band, whether the associated band is used as the band related to switching is not specified in the current related standard.

In a possible case, when the associated band is used as the band related to switching, if a priority of the associated band is higher than a priority of another band, processing may be performed according to the method described in the foregoing case 1, and a transmission time period of the switch-to band is sacrificed, which is actually unnecessary. If the priority of the associated band is lower than the priority of the another band, the switching period location cannot be determined.

In another possible case, when the associated band is not used as the band related to switching, in the bands related to switching, priorities of the switch-from band and the switch-to band are the same. Therefore, the switching period location cannot be determined.

In conclusion, in the foregoing switching scenario, when the switch-from band and the switch-to band include a same band (namely, the band C), the same band is not only related to switching, but also has the highest priority, and quantities of transmission chains on the same band before and after switching are different, neither the terminal device nor the network device can uniquely determine the switching period location. Therefore, the problem described in the foregoing problem 2 exists in the foregoing switching scenario.

To determine the switching period location in more scenarios and improve spectrum efficiency, embodiments of this application provide a communication method and a communication apparatus.

FIG. 5 shows a communication system to which a communication method provided in embodiments of this application is applicable. As shown in FIG. 5, the communication scenario includes at least a terminal device and a network device. The network device may be a radio access network device. Optionally, the communication system may further include a core network device.

It should be noted that, the communication system may include more terminal devices and more network devices. A quantity of terminal devices and a quantity of network devices in the communication system are not limited in embodiments of this application.

It should be further noted that, the communication system shown in FIG. 5 is used as an example, and constitutes no limitation on the communication system to which the method provided in embodiments of this application is applicable. For example, communication technologies of various standards may be used between the terminal device and the network device, for example, a 5th generation (5th Generation, 5G) communication technology (namely, an NR technology), a 4th generation (4th Generation, 5G) communication technology (namely, a long term evolution (long term evolution, LTE) technology), a 6th generation (6th Generation, 6G) communication technology, and a communication technology evolved based on the foregoing technologies.

In addition, the solution provided in embodiments of this application may also be applied to the communication system shown in FIG. 3 or a communication system with a similar architecture.

Refer to FIG. 6. A communication method provided in an embodiment of this application may include the following steps.

S601: When switching from M frequency domain resources to N frequency domain resources, a communication apparatus determines, from the M frequency domain resources and the N frequency domain resources, a frequency domain resource on which a switching period is located, where M and N are positive integers and a sum of M and N is greater than 2, and the switching period is a time period for switching from the M frequency domain resources to the N frequency domain resources.

In embodiments of this application, the communication apparatus may be a terminal device or a network device. The network device may schedule a frequency domain resource used by the terminal device to perform uplink transmission, and the terminal device may perform uplink transmission by using the frequency domain resource scheduled by the network device. The network device and the terminal device may switch from the M frequency domain resources to the N frequency domain resources when the frequency domain resource scheduled by the network device changes.

In embodiments of this application, that the terminal device switches from the M frequency domain resources to the N frequency domain resources may be understood as that the terminal device switches from communicating with the network device by using the M frequency domain resources to communicating with the network device by using the N frequency domain resources. That the network device switches from the M frequency domain resources to the N frequency domain resources may be understood as that the network device switches from communicating with the terminal device by using the M frequency domain resources to communicating with the terminal device by using the N frequency domain resources.

In embodiments of this application, the frequency domain resource may be a band or a carrier. "Use" may be "through".

In embodiments of this application, the M frequency domain resources are switch-from (switch from) frequency domain resources, that is, switch-from frequency domain resources or switch from frequency domain resources or switching from the frequency domain resources, and the N frequency domain resources are switch-to frequency domain resources, that is, switch-to frequency domain resources or switch to frequency domain resources or switching to the frequency domain resources.

In embodiments of this application, the frequency domain resource on which the switching period is located is a switching period location. The switching period in step S601 is a general term. During switching from the M frequency domain resources to the N frequency domain resources, there are the following several cases.
(1) If switching periods needed for switching from one of the M frequency domain resources to one of the N frequency domain resources are different, and switching period locations belong to one side (specifically, a plurality of needed switching periods all belong to the switch-from frequency domain resource or the switch-to frequency domain resource), a final switching period is a largest value among the plurality of needed switching periods.
   For example, the M frequency domain resources include a band A and a band B, and the N frequency domain resources include a band C and a band D. If a switching period needed for switching from the band A to the band C is a first switching period, a switching period needed for switching from the band A to the band D is a second switching period, a switching period needed for switching from the band B to the band C is a third switching period, and a switching period needed for switching from the band B to the band D is a fourth switching period, a final switching period may be a largest switching period among the first switching period, the second switching period, the third switching period, and the fourth switching period.
(2) If switching periods needed for switching from one of the M frequency domain resources to one of the N frequency domain resources are different, and switching period locations do not belong to one side (specifically, in a plurality of needed switching periods, some switching periods belong to (or are located on) the switch-from frequency domain resource, and the other switching periods belong to the switch-to frequency domain resource), a final switching period is a union set of the plurality of needed switching periods, or is the plurality of independent switching periods separately.

For example, the M frequency domain resources include a band A and a band B, and the N frequency domain resources include a band C and a band D. In a possible switching manner, if a switching period needed for switching from the band A to the band C is a first switching period, the first switching period is located on the band A, a switching period needed for switching from the band B to the band D is a second switching period, and the second switching period is located on the band D, a final switching period may be a union set of the first switching period and the second switching period (which may be understood as a time period obtained by adding the first switching period and the second switching period, or a range of the first switching period and the second switching period in time domain, or a time period between a start moment of the first switching period and an end moment of the second switching period), or a final switching period is the first switching period and the second switching period separately.

For example, the M frequency domain resources include a band A and a band B, and the N frequency domain resources include a band C and a band D. In a possible switching manner, if a switching period needed for switching from the band A to the band C is a first switching period, the first switching period is located on the band A, a switching period needed for switching from the band A to the band D is a third switching period, the third switching period is located on the band A, a switching period needed for switching from the band B to the band D is a second switching period, the second switching period is located on the band D, a switching period needed for switching from the band B to the band C is a fourth switching period, and the fourth switching period is located on the band D, a final switching period may be a union set of a corresponding switching period obtained by taking a larger value between the first switching period and the third switching period and a corresponding switching period obtained by taking a larger value between the second switching period and the fourth switching period (which may be understood as a time period obtained by adding the switching periods corresponding to the two larger values, a range of the switching periods corresponding to the two larger values in time domain, or a time period between a start moment of the corresponding switching period obtained by taking the larger value between the first switching period and the third switching period and an end moment of the corresponding switching period obtained by taking the larger value between the second switching period and the fourth switching period), or a final switching period is the switching periods corresponding to the two larger values separately.

(3) If switching periods needed for switching from one of the M frequency domain resources to one of the N frequency domain resources are the same, and switching period locations all belong to one side, a final switching period is the needed switching period.

For example, the M frequency domain resources include a band A and a band B, and the N frequency domain resources include a band C and a band D. In a possible switching manner, if a switching period needed for switching from the band A to the band C is a first switching period, the first switching period is located on the band A, a switching period needed for switching from the band B to the band D is a second switching period, the second switching period is located on the band B, and duration of the first switching period is the same as duration of the second switching period, a final switching period may be the first switching period or the second switching period.

(4) If switching periods needed for switching from one of the M frequency domain resources to one of the N frequency domain resources are the same, and switching period locations do not belong to one side, a final switching period is a union set of the plurality of needed switching periods, or is the plurality of independent switching periods separately.

For example, the M frequency domain resources include a band A and a band B, and the N frequency domain resources include a band C and a band D. In a possible switching manner, if a switching period needed for switching from the band A to the band D is a first switching period, the first switching period is located on the band D, a switching period needed for switching from the band B to the band C is a second switching period, and the second switching period is located on the band B, a final switching period may be a union set of the first switching period and the second switching period (which may be understood as a time period obtained by adding the second switching period and the first switching period, or a time period between a start moment of the second switching period and an end moment of the first switching period), or a final switching period is the first switching period and the second switching period separately .

In some embodiments of this application, the frequency domain resource on which the switching period is located may be a frequency domain resource determined in at least one of the following manners.

Manner 1: The frequency domain resource on which the switching period is located is a frequency domain resource that has no highest priority in frequency domain resources other than a first frequency domain resource in the M frequency domain resources and the N frequency domain resources, and the frequency domain resource on which the switching period is located is the M frequency domain resources or the N frequency domain resources. The first frequency domain resource is a frequency domain resource included in the M frequency domain resources, and the first frequency domain resource is a frequency domain resource included in the N frequency domain resources.

Manner 2: The frequency domain resource on which the switching period is located is a frequency domain resource that has no highest priority in a frequency domain resource belonging to a first specified type in the M frequency domain resources and the N frequency domain resources, and the frequency domain resource on which the switching period is located is the M frequency domain resources or the N frequency domain resources.

The first specified type may include at least one of the following: Uplink transmission is scheduled, and uplink transmission is performed on a frequency domain resource at a specified location in a scheduled frequency domain resource; a physical uplink control channel does not exist/is not included; and no associated band is included.

In this embodiment of this application, the frequency domain resource belonging to the first specified type may also be understood as a frequency domain resource of the first specified type.

In some embodiments of this application, the specified location is a time domain location, and that uplink transmission is performed on the frequency domain resource at the specified location may be understood as that uplink transmission is performed on the frequency domain resource in time corresponding to the specified location. In some embodiments of this application, the specified location may be a location at a tail of a last time unit before switching or a location at a header of a 1^{st} time unit after switching. Duration of the tail or the head may be specified duration or may be equal to duration of the switching period. When the scheduled frequency domain resource is the switch-from frequency domain resource, the specified location may be the location at the tail of the last time unit before switching. When the scheduled frequency domain resource is the switch-to frequency domain resource, the specified location may be the location at the head of the 1^{st} time unit after switching.

In this application, an example in which the switching period occupies four symbols is used. A corresponding switching period is 140 microseconds (us), and a subcarrier spacing of the frequency domain resource is 30 kHz. The switching period may alternatively be any value of 35 us, 210 us, or 280 us.

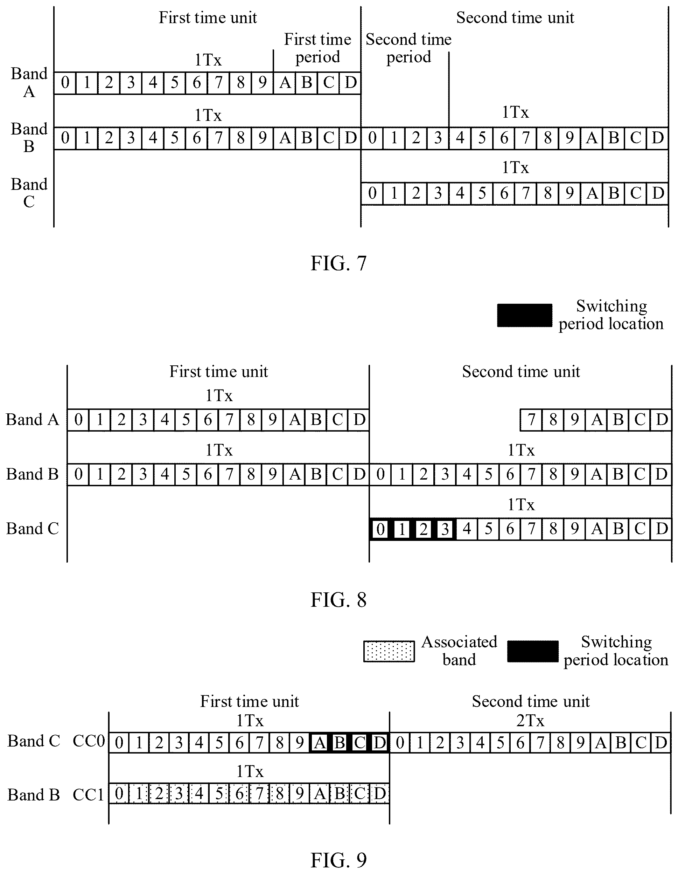

For example, as shown in FIG. 7, in a scenario in which transmission of 1T on a band A and transmission of 1T on a band B are switched to transmission of 1T on the band B and transmission of 1T on a band C, and a priority of the band B is the highest, it can be learned based on the foregoing definition of the specified location that, the specified location may be a location in a first time period or a location in a second time period shown in FIG. 7. The first time period is a time period at the tail of the last time unit before switching, namely, the first time unit, and the second time period is a time period at the head of the 1^{st} time unit after switching, namely, the second time unit. For example, as shown in FIG. 7, when the first time unit and the second time unit each are one slot, the first time period may be four symbols at the tail of the first time unit. In this case, when the specified location is a location at the tail of the last time unit before switching, the specified location may be at least one of the four symbols. The second time period may be four symbols at the head of the second time unit. In this case, when the specified location is a location at the head of the 1^{st} time unit after switching, the specified location may be at least one of the four symbols.

In this manner, the M frequency domain resources may include the first frequency domain resource, and the N frequency domain resources may include the first frequency domain resource.

Manner 3: The frequency domain resource on which the switching period is located is the M frequency domain resources or the N frequency domain resources, where the M frequency domain resources include the first frequency domain resource, and the N frequency domain resources include the first frequency domain resource.

In this embodiment of this application, that the frequency domain resource on which the switching period is located is the M frequency domain resources or the N frequency domain resources may also be understood as that the frequency domain resource on which the switching period is located belongs to the M frequency domain resources or the N frequency domain resources.

In some embodiments of this application, when a priority of information carried on the first frequency domain resource in the M frequency domain resources is higher than a priority of information carried on the first frequency domain resource in the N frequency domain resources, it may be determined that the frequency domain resource on which the switching period is located is the N frequency domain resources. When a priority of information carried on the first frequency domain resource in the N frequency domain resources is higher than a priority of information carried on the first frequency domain resource in the M frequency domain resources, it may be determined that the frequency domain resource on which the switching period is located is the M frequency domain resources. The first frequency domain resource in the M frequency domain resources may be understood as a switch-from first frequency domain resource, and the first frequency domain resource in the N frequency domain resources may be understood as a switch-to first frequency domain resource.

For the priority of the carried information, it may be considered that the carried information is: a physical random access channel (physical random access channel, PRACH), or a physical uplink control channel (physical uplink control channel, PUCCH)/physical uplink shared channel (physical uplink shared channel, PUSCH) including a hybrid automatic repeat request (hybrid automatic repeat request, HARQ), or a PUCCH/PUSCH excluding a HARQ, or a PUCCH/PUSCH including only channel state information (channel state information, CSI), or a PUCCH/PUSCH including CSI (where the CSI is periodic CSI, and/or the CSI includes only a channel quality indicator (channel quality indication, CQI)/precoding matrix indicator (precoding matrix indicator, PMI)), or a periodic/aperiodic sounding reference signal (sounding reference signal, SRS), or the like. For example, a priority order may be all or some of the following lists: PRACH>PUCCH/PUSCH including a HARQ>PUCCH/PUSCH excluding a HARQ>PUCCH/PUSCH including only CSI>PUCCH/PUSCH including CSI (where the CSI is periodic CSI, and/or the CSI includes only a CQI/PMI)>aperiodic SRS>periodic SRS. Details are not listed one by one.

In some embodiments of this application, when a quantity of uplink transmission chains or a quantity of scheduled ports on the M frequency domain resources is less than a quantity of uplink transmission chains or a quantity of scheduled ports on the N frequency domain resources, it may be determined that the frequency domain resource on which the switching period is located is the M frequency domain resources. When a quantity of uplink transmission chains or a quantity of scheduled ports on the N frequency domain resources is less than a quantity of uplink transmission chains or a quantity of scheduled ports on the M frequency domain resources, it may be determined that the frequency domain resource on which the switching period is located is the N frequency domain resources. The quantity of scheduled ports is a quantity of ports scheduled for uplink transmission.

In some embodiments of this application, when a quantity of uplink transmission chains or a quantity of scheduled ports on frequency domain resources other than the first frequency domain resource in the M frequency domain resources is less than a quantity of uplink transmission chains or a quantity of scheduled ports on frequency domain resources other than the first frequency domain resource in the N frequency domain resources, it may be determined that the frequency domain resource on which the switching period is located is the M frequency domain resources; or when a quantity of uplink transmission chains or a quantity of scheduled ports on frequency domain resources other than the first frequency domain resource in the N frequency domain resources is less than a quantity of uplink transmission chains or a quantity of scheduled ports on frequency domain resources other than the first frequency domain resource in the M frequency domain resources, it may be determined that the frequency domain resource on which the switching period is located is the N frequency domain resources.

For example, in the following scenario, in addition to the first frequency domain resource, the switch-from frequency domain resource further includes a fourth frequency domain resource, and in addition to the first frequency domain resource, the switch-to frequency domain resource further includes a fifth frequency domain resource. A quantity of uplink transmission chains or a quantity of scheduled ports on the fourth frequency domain resource is less than a quantity of uplink transmission chains or a quantity of scheduled ports on the fifth frequency domain resource. The following rule is satisfied: If a quantity of uplink transmission chains or a quantity of scheduled ports on frequency domain resources other than the first frequency domain resource in the M frequency domain resources is less than a quantity of uplink transmission chains or a quantity of scheduled ports on frequency domain resources other than the first frequency domain resource in the N frequency domain resources, the frequency domain resource on which the switching period is located is the M frequency domain resources. Therefore, in the foregoing scenario, the frequency domain resource on which the switching period is located is the switch-from frequency domain resource.

For another example, in the following scenario, in addition to the first frequency domain resource, the switch-from frequency domain resource further includes a fourth frequency domain resource, and in addition to the first frequency domain resource, the switch-to frequency domain resource includes no other frequency domain resource. A quantity of uplink transmission chains or a quantity of scheduled ports on the fourth frequency domain resource is 1. However, the switch-to frequency domain resource includes no other frequency domain resource other than the first frequency domain resource, that is, the quantity of uplink transmission chains or the quantity of scheduled ports is 0. The following rule is satisfied: If a quantity of uplink transmission chains or a quantity of scheduled ports on frequency domain resources other than the first frequency domain resource in the N frequency domain resources is less than a quantity of uplink transmission chains or a quantity of scheduled ports on frequency domain resources other than the first frequency domain resource in the M frequency domain resources, the frequency domain resource on which the switching period is located is the N frequency domain resources. Therefore, in the foregoing scenario, the frequency domain resource on which the switching period is located is the switch-to frequency domain resource.

In this embodiment of this application, less than may also be understood as smaller than, and more than may also be understood as greater than.

Manner 4: The frequency domain resource on which the switching period is located is a frequency domain resource, other than a frequency domain resource on which a physical uplink control channel is located, in the M frequency domain resources or the N frequency domain resources.

In this manner, the M frequency domain resources may include the first frequency domain resource, and the N frequency domain resources may include the first frequency domain resource.

In some embodiments of this application, when the frequency domain resource on which the physical uplink control channel is located belongs to the M frequency domain resources, it may be determined that the frequency domain resource on which the switching period is located is the N frequency domain resources. When the frequency domain resource on which the physical uplink control channel is located belongs to the N frequency domain resources, it may be determined that the frequency domain resource on which the switching period is located is the M frequency domain resources.

The first frequency domain resource described in the foregoing four manners is the same frequency domain resource included in the M frequency domain resources and the N frequency domain resources. In other words, the first frequency domain resource belongs to both the M frequency domain resources and the N frequency domain resources. The frequency domain resource having no highest priority in the foregoing four manners may be understood as a frequency domain resource other than a frequency domain resource having the highest priority.

In this embodiment of this application, that the frequency domain resource on which the switching period is located is the M frequency domain resources may be understood as at least one of the following: The frequency domain resource on which the switching period is located belongs to the M frequency domain resources; the frequency domain resource on which the switching period is located is included in/is included in the M frequency domain resources; the frequency domain resource on which the switching period is located is the switch-from frequency domain resources; and the frequency domain resource on which the switching period is located belongs to the switch-from frequency domain resources. In this embodiment of this application, that the frequency domain resource on which the switching period is located is the N frequency domain resources may be understood as at least one of the following: The frequency domain resource on which the switching period is located belongs to the N frequency domain resources; the frequency domain resource on which the switching period is located is included in/is included in the N frequency domain resources; the frequency domain resource on which the switching period is located is the switch-to frequency domain resources; and the frequency domain resource on which the switching period is located belongs to the switch-to frequency domain resources.

In this embodiment of this application, the frequency domain resource having no highest priority may be understood as a frequency domain resource having a lowest priority. That is, when the frequency domain resource on which the switching period is located is determined, the switch-from frequency domain resource or the switch-to frequency domain resource on which the frequency domain resource having the highest priority is located is excluded. This may also be understood as: When the frequency domain resource on which the switching period is located is determined, the switch-from frequency domain resource or the switch-to frequency domain resource on which the frequency domain resource having the lowest priority is located is set as the frequency domain resource on which the switching period is located.

In some embodiments of this application, the highest priority may be understood as a high priority, and a lowest priority may be understood as a low priority.

In some embodiments of this application, in the foregoing four manners, on M bands and N bands, a priority of a first band is higher than a priority of another band.

In some embodiments of this application, when determining, from the M frequency domain resources and the N frequency domain resources, the frequency domain resource on which the switching period is located, the communication apparatus may first determine, from the M frequency domain resources and the N frequency domain resources, a frequency domain resource related to switching, and then determine, from the frequency domain resource related to switching, the frequency domain resource on which the switching period is located. The frequency domain resource related to switching is the M frequency domain resources and the N frequency domain resources, or frequency domain resources other than the first frequency domain resource in the M frequency domain resources and the N frequency domain resources.

In some embodiments of this application, when a quantity of uplink transmission chains on the first frequency domain resource does not change before and after switching, the frequency domain resource related to switching includes the frequency domain resource other than the first frequency domain resource in the M frequency domain resources and the N frequency domain resources. In this manner, a frequency domain resource on which a switching gap is located may be a frequency domain resource other than the frequency domain resource having the highest priority in the M frequency domain resources and the N frequency domain resources, and the frequency domain resource on which the switching gap is located belongs to the M frequency domain resources or belongs to the N frequency domain resources.

In some embodiments of this application, when a second frequency domain resource is in an in-band carrier aggregation state, the second frequency domain resource is configured with no associated band, or an associated band of the second frequency domain resource is not used, where the second frequency domain resource belongs to the M frequency domain resources or the N frequency domain resources. Optionally, uplink transmission on two carriers in the second frequency domain resource is transmission corresponding to one uplink transmission chain or transmission on one port.

In this embodiment of this application, the transmission on one port is transmission that is performed with a port quantity (port number) of 1.

Optionally, the communication method may further include the following step S602.

S602: The communication apparatus switches from the M frequency domain resources to the N frequency domain resources within the switching period.

That the communication apparatus switches from the M frequency domain resources to the N frequency domain resources within the switching period may also be understood as: The communication apparatus switches from the M frequency domain resources to the N frequency domain resources based on the switching period and/or the frequency domain resource on which the switching period is located.

In this embodiment of this application, "based on" may be understood as "according to".

In some embodiments of this application, if a quantity of uplink transmission chains or a quantity of scheduled ports on a third frequency domain resource changes during switching from the M frequency domain resources to the N frequency domain resources, the communication apparatus may not perform switching of the third frequency domain resource or there is no switching period on the third frequency domain resource, where the third frequency domain resource belongs to the M frequency domain resources and/or the N frequency domain resources.

In some embodiments of this application, when one port is scheduled on the third frequency domain resource for transmission, and there is no other scheduled frequency domain resource, the third frequency domain resource may be configured with no associated band, or an associated band of the third frequency domain resource is not used.

In this embodiment of this application, that there is no switching period on the third frequency domain resource may also be understood as: On the third frequency domain resource, the communication apparatus does not perform frequency domain resource switching, or does not interrupt information transmission. In this application, the information transmission includes at least one of data information transmission, control information transmission, or reference signal transmission. Optionally, the information transmission may be at least one of uplink data information transmission, control information transmission, or reference signal transmission. Optionally, the information transmission may alternatively be at least one of downlink data information transmission, control information transmission, or reference signal transmission.

The foregoing embodiments provide a plurality of methods for determining a switching period location, to help the communication apparatus effectively determine the switching period location in more frequency domain resource switching scenarios, thereby reducing a waste of spectrum resources, and improving spectrum resource utilization. For example, in a scenario in which a same frequency domain resource exists before and after switching and a priority of the same frequency domain resource is the highest, the switching period location cannot be determined based on an existing solution, but the switching period location can be effectively determined based on the solution provided in the foregoing embodiment.

Based on the communication method provided in the foregoing embodiments, embodiments of this application further provide the following Embodiment 1 to Embodiment 5. The following describes each embodiment.

### Embodiment 1

In this embodiment, a communication apparatus may determine, according to Manner 1 provided in the foregoing embodiments, a switching period location during frequency domain resource switching.

In a possible solution, when the communication apparatus performs frequency domain resource switching, a switch-from frequency domain resource (which may be referred to as before switching or switching from (switching from) for short) may be as one party, and a switch-to frequency domain resource (which may be referred to as after switching or switching to (switching to) for short) may be as one party. When both the switch-from frequency domain resource and the switch-to frequency domain resource include a first frequency domain resource (or the switch-from frequency domain resource and the switch-to frequency domain resource include a frequency domain resource having a same priority, where the frequency domain resource having the same priority is denoted as the first frequency domain resource), a priority of the first frequency domain resource is the highest (or priorities of frequency domain resources other than the first frequency domain resource are lower than the priority of the first frequency domain resource), and when a quantity of uplink transmission chains on the switch-from first frequency domain resource and a quantity of uplink transmission chains on the switch-to first frequency domain resource do not change, the communication apparatus may determine that a frequency domain resource having a highest priority other than the first frequency domain resource is not used as a frequency domain resource on which a switching period is located, or a frequency domain resource having a low priority other than the first frequency domain resource is used as a frequency domain resource on which a switching period is located. A frequency domain resource related to switching may be all frequency domain resources on which uplink transmission chains are scheduled.

In other words, when the quantity of uplink transmission chains on the first frequency domain resource remains unchanged, and the first frequency domain resource exists on both the switch-from frequency domain resource and the switch-to frequency domain resource, the first frequency domain resource is listed as the frequency domain resource related to switching. When the priority of the first frequency domain resource is the highest, the communication apparatus may compare priorities of frequency domain resources other than the first frequency domain resource, and determine a fourth frequency domain resource having a highest priority. If the fourth frequency domain resource belongs to the switch-from frequency domain resource, it may be determined that the switch-to frequency domain resource is the frequency domain resource on which the switching period is located. If the fourth frequency domain resource belongs to the switch-to frequency domain resource, it may be determined that the switch-from frequency domain resource is the frequency domain resource on which the switching period is located.

The frequency domain resource related to switching may be referred to as a switching frequency domain resource. The switch-from frequency domain resource may be understood as a switching frequency domain resource in a first time unit, and the switch-to frequency domain resource may be understood as a switching frequency domain resource in a second time unit. The first time unit is adjacent to the second time unit, and the first time unit is earlier than the second time unit.

For example, a frequency domain resource switching scenario is the scenario of switching across three bands described in Example 1 in the foregoing embodiments. In this scenario, the switch-from frequency domain resource is a band A and a band B, and the switch-to frequency domain resource is the band B and a band C. When a priority of the band B is the highest, based on the method for determining the frequency domain resource on which the switching period is located that is provided in this embodiment, it may be determined that the frequency domain resource related to switching is the band A, the band B, and the band C. If a priority of the band A is higher than that of the band C, the frequency domain resource on which the switching period is located is the band C. If a priority of the band C is higher than that of the band A, a band on which the switching period is located is the band A. Therefore, the method provided in this embodiment can resolve the problem 1 in the foregoing embodiments.

Based on the foregoing method, when a same frequency domain resource (for example, a same band (or referred to as a shared band) or even a same carrier) exists in a switch-from frequency domain resource and a switch-to frequency domain resource, the communication apparatus can still effectively determine the switching period location when priorities of frequency domain resources cannot be distinguished, thereby reducing a waste of spectrum resources and improving spectrum resource utilization.

### Embodiment 2

In this embodiment, a communication apparatus may determine, according to Manner 3 and/or Manner 4 provided in the foregoing embodiments, a switching period location during frequency domain resource switching.

In a possible solution, when the communication apparatus performs frequency domain resource switching, a switch-from frequency domain resource (which may be referred to as before switching or switching from (switching from) for short) may be as one party, and a switch-to frequency domain resource (which may be referred to as after switching or switching to (switching to) for short) may be as one party. When both the switch-from frequency domain resource and the switch-to frequency domain resource include a first frequency domain resource (or the switch-from frequency domain resource and the switch-to frequency domain resource include a frequency domain resource having a same priority, where the frequency domain resource having the same priority is denoted as the first frequency domain resource), a priority of the first frequency domain resource is the highest (or priorities of frequency domain resources other than the first frequency domain resource are lower than the priority of the first frequency domain resource), and when a quantity of uplink transmission chains on the switch-from first frequency domain resource and a quantity of uplink transmission chains on the switch-to first frequency domain resource do not change, in an optional implementation, the communication apparatus may use the switch-from frequency domain resource/the switch-to frequency domain resource as a frequency domain resource on which a switching period is located; and in another optional implementation, the communication apparatus may use a frequency domain resource other than a frequency domain resource on which a physical uplink control channel is located as a frequency domain resource on which a switching period is located. In still another optional implementation, the communication apparatus may compare a priority of content carried in the first frequency domain resource in the switch-from frequency domain resource and a priority of content carried in the first frequency domain resource in the switch-to frequency domain resource. When the priority of the content carried in the first frequency domain resource in the switch-from frequency domain resource is higher than the priority of the content carried in the first frequency domain resource in the switch-to frequency domain resource, the communication apparatus may determine that the switch-to frequency domain resource is a frequency domain resource on which a switching period is located; and on the contrary, the communication apparatus determines that the switch-from frequency domain resource is a frequency domain resource on which a switching period is located. Optionally, a priority order of the content carried on the frequency domain resource may be that a priority of a physical random access channel is higher than that of the physical uplink control channel, and the priority of the physical uplink control channel is higher than that of a physical uplink shared channel. It should be understood that, the priority order is not limited to the foregoing order, and may also be another order. This is not specifically limited in embodiments of this application.

Based on the foregoing method, when a same frequency domain resource (for example, a same band (or referred to as a shared band) or even a same carrier) exists in a switch-from frequency domain resource and a switch-to frequency domain resource, the communication apparatus can still effectively determine the switching period location when priorities of frequency domain resources cannot be distinguished, thereby reducing a waste of spectrum resources and improving spectrum resource utilization.

### Embodiment 3

In some embodiments of this application, when the communication apparatus performs frequency domain resource switching, if both a switch-from frequency domain resource and a switch-to frequency domain resource include a first frequency domain resource (or the switch-from frequency domain resource and the switch-to frequency domain resource include a frequency domain resource having a same priority, where the frequency domain resource having the same priority is denoted as the first frequency domain resource), a priority of the first frequency domain resource is the highest (or priorities of frequency domain resources other than the first frequency domain resource are lower than the priority of the first frequency domain resource), and a quantity of uplink transmission chains on the switch-from first frequency domain resource and a quantity of uplink transmission chains on the switch-to first frequency domain resource do not change, the communication apparatus may not list the first frequency domain resource as a frequency domain resource related to switching. In other words, when determining a frequency domain resource on which a switching gap is located, the communication apparatus does not consider the first frequency domain resource (which may also be understood as excluding the first frequency domain resource).

For example, a frequency domain resource switching scenario is the scenario of switching across three bands described in Example 1 in the foregoing embodiments. In this scenario, the switch-from frequency domain resource is a band A and a band B, and the switch-to frequency domain resource is the band B and a band C. When a priority of the band B is the highest, based on the method for determining the frequency domain resource on which the switching period is located that is provided in this embodiment, it may be determined that the band related to switching is the band A and the band C. If a priority of the band A is higher than that of the band C, the frequency domain resource on which the switching period is located is the band C. If a priority of the band C is higher than that of the band A, a band on which the switching period is located is the band A. Therefore, the method provided in this embodiment can resolve the problem 1 in the foregoing embodiments.

In some embodiments of this application, if both a switch-from frequency domain resource and a switch-to frequency domain resource include a first frequency domain resource (or the switch-from frequency domain resource and the switch-to frequency domain resource include a frequency domain resource having a same priority, where the frequency domain resource having the same priority is denoted as the first frequency domain resource), a priority of the first frequency domain resource is the highest (or priorities of frequency domain resources other than the first frequency domain resource are lower than the priority of the first frequency domain resource), and no transmission occurs on the switch-to first frequency domain resource, the communication apparatus may not list the first frequency domain resource as a frequency domain resource related to switching. When duration in which no transmission occurs on the switch-to first frequency domain resource is greater than duration of the switching period, it may be considered that no transmission occurs on the first frequency domain resource. In embodiments of this application, whether transmission occurs or no transmission occurs may be specific to one time unit (for example, one slot). For example, that the duration in which no transmission occurs on the switch-to first frequency domain resource is greater than the duration of the switching period may be understood as: In a 1^{st} time unit obtained after switching, the duration in which no transmission occurs on the first frequency domain resource is greater than the duration of the switching period.

For example, as shown in FIG. 8, in a scenario of switching from a band A and a band B to the band A and a band C, an example in which a priority of the band A is higher than that of the band B, the priority of the band B is higher than that of the band C, a first time unit and a second time unit each are one slot, and the switching period is four symbols is used. Based on the foregoing method, when no uplink transmission is performed on the first seven symbols in the second time unit on the switch-to band A, a quantity of slots in which no transmission occurs on the switch-to band A is seven, which is greater than a slot quantity of four corresponding to the switching period. Therefore, although both the switch-from frequency domain resource and the switch-to frequency domain resource include the band A, the band A is not listed as the frequency domain resource related to switching. Therefore, in this scenario, the frequency domain resource related to switching includes the band B and the band C. Because the priority of the band B is higher than that of the band C, it may be determined that a frequency domain resource on which the switching period is located is the band C.

Based on the foregoing method, when a same frequency domain resource (for example, a same band (or referred to as a shared band) or even a same carrier) exists in a switch-from frequency domain resource and a switch-to frequency domain resource, the communication apparatus can still effectively determine the switching period location when priorities of frequency domain resources cannot be distinguished, thereby reducing a waste of spectrum resources and improving spectrum resource utilization.

### Embodiment 4

In this embodiment, a communication apparatus may determine, according to Manner 3 provided in the foregoing embodiments, a switching period location during frequency domain resource switching.

In a possible solution, when the communication apparatus performs frequency domain resource switching, a switch-from frequency domain resource (which may be referred to as before switching or switching from (switching from) for short) may be as one party, and a switch-to frequency domain resource (which may be referred to as after switching or switching to (switching to) for short) may be as one party. When both the switch-from frequency domain resource and the switch-to frequency domain resource include a first frequency domain resource (or the switch-from frequency domain resource and the switch-to frequency domain resource include a frequency domain resource having a same priority, where the frequency domain resource having the same priority is denoted as the first frequency domain resource), and a priority of the first frequency domain resource is the highest (or priorities of frequency domain resources other than the first frequency domain resource are lower than the priority of the first frequency domain resource), the communication apparatus may use a frequency domain resource with a small quantity of uplink transmission chains or a small quantity of scheduled ports as a frequency domain resource on which the switching period is located. When a quantity of uplink transmission chains or a quantity of scheduled ports on the switch-from frequency domain resource is less than a quantity of uplink transmission chains or a quantity of scheduled ports on the switch-to frequency domain resource, a frequency domain resource on which a switching gap is located is the switch-from frequency domain resource. When a quantity of uplink transmission chains or a quantity of scheduled ports on the switch-to frequency domain resource is less than a quantity of uplink transmission chains or a quantity of scheduled ports on the switch-from frequency domain resource, a frequency domain resource on which a switching gap is located is the switch-to frequency domain resource. A frequency domain resource related to switching is a frequency domain resource scheduled for uplink transmission other than an associated band, or all frequency domain resources scheduled for uplink transmission, or all frequency domain resources including an associated band.

For example, a frequency domain resource switching scenario is the band switching scenario in Example 2 in the foregoing embodiment. In this scenario, as shown in FIG. 9, the switch-from frequency domain resource is a band B and a band C, and the switch-to frequency domain resource is the band C. Based on the method for determining the frequency domain resource on which the switching period is located that is provided in this embodiment, the following may be determined: The band related to switching may be all the frequency domain resources, namely, the band B and the band C, including the associated band. Because a quantity of transmission chains on the band C changes before and after switching, and a quantity (1) of transmission chains on the switch-from band C is less than a quantity (2) of transmission chains on the switch-to band C, a band on which the switching period is located may be the switch-from band, namely, the band B and the band C. Therefore, the method provided in this embodiment can resolve the problem 2 in the foregoing embodiments.

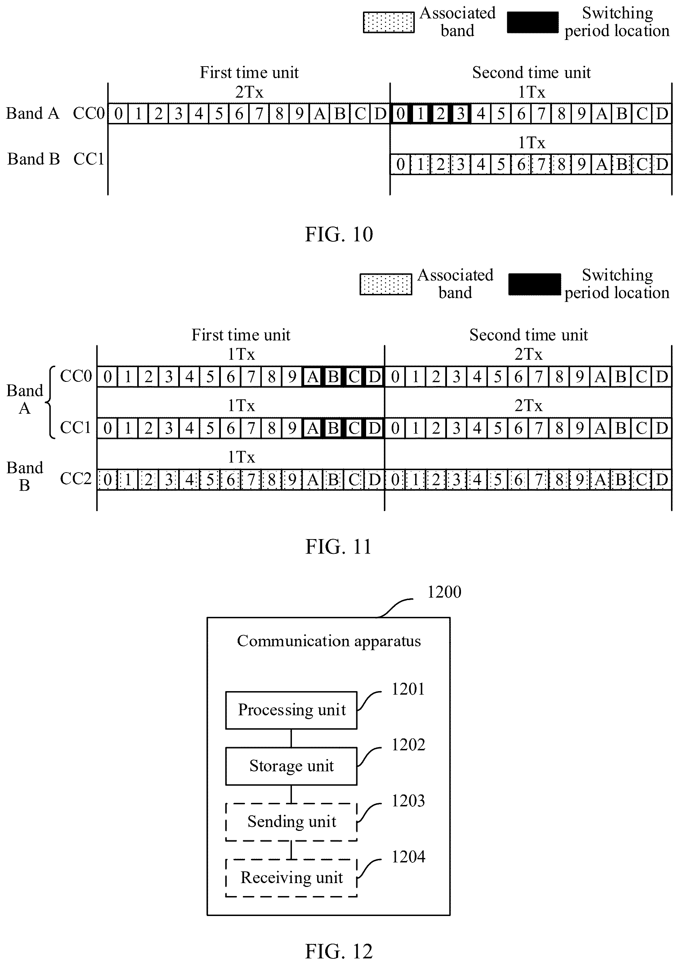

For example, as shown in FIG. 10, a band switching scenario may be as follows: The band B is an associated band of a band A. When transmission of 2T on a carrier CC0 on the band A is switched to transmission of 1T, it may be determined, based on the foregoing definition of the associated band, that the associated band B of the band A also carries transmission of 1T (for example, a carrier CC1 on the band B carries transmission of 1T), but no content is sent. Therefore, in this scenario, the switch-from frequency domain resource is the band A, and the switch-to band resource is the band A and the band B. Based on the method for determining the frequency domain resource on which the switching period is located that is provided in this embodiment, it may be determined that a band related to switching may be a frequency domain resource, namely, the band A, on which uplink transmission is scheduled other than the associated band. Because a quantity of transmission chains on the switch-from band A and a quantity of transmission chains on the switch-to band A change, and the quantity (1) of transmission chains on the switch-to band A is less than the quantity (2) of transmission chains on the switch-from band A, the band on which the switching period is located may be the switch-to band, namely, the switch-to band A. Therefore, the method provided in this embodiment can resolve the problem 2 in the foregoing embodiments.

Based on the foregoing method, when a same frequency domain resource (for example, a same band (or referred to as a shared band) or even a same carrier) exists in a switch-from frequency domain resource and a switch-to frequency domain resource, the communication apparatus can still effectively determine the switching period location when quantities of transmission chains on the same frequency domain resource obtained before and after switching are different, thereby reducing a waste of spectrum resources and improving spectrum resource utilization.

### Embodiment 5

In a possible solution, in a scenario in which M frequency domain resources are switched to N frequency domain resources in the foregoing embodiment, when a second frequency domain resource is in an in-band carrier aggregation state, the second frequency domain resource is not configured with an associated band (that is, a terminal device or a network device does not configure the associated band for the second frequency domain resource), or an associated band of the second frequency domain resource is not used (that is, even if a terminal device or a network device configures the associated band for the second frequency domain resource, the terminal device or the network device does not use the associated band of the second frequency domain resource). When a second frequency domain resource is not in an in-band carrier aggregation state, the second frequency domain resource may be configured with an associated band, and the associated band may be used (that is, a terminal device or a network device may configure the associated band for the second frequency domain resource, or may use the associated band of the second frequency domain resource). The second frequency domain resource belongs to the M frequency domain resources or the N frequency domain resources.

In an optional implementation, uplink transmission on two carriers in the second frequency domain resource is transmission corresponding to one uplink transmission chain or transmission on one port. Specifically, when a switching mode is dual (dual) uplink transmission on the second frequency domain resource (that is, two carriers correspond to one uplink transmission chain), dual 1T is scheduled on the switch-to second frequency domain resource for transmission, and the second frequency domain resource is scheduled for transmission on one port, if the second frequency domain resource is in the in-band carrier aggregation state (or the two carriers in the second frequency domain resource are scheduled for transmission on one port), the second frequency domain resource is not configured with the associated band, or the associated band of the second frequency domain resource is not used. In this case, 2T is switched to the second frequency domain resource.

For example, as shown in FIG. 11, when the associated band is defined, a band B is an associated band of a band A, and a carrier CC0 and a carrier CC1 on the band A are in a carrier aggregation state. Before switching, transmission of 1T is performed on both the carrier CC0 and the carrier CC1. Because the band B is the associated band of the band A, transmission of 1T is performed on the band B (which may be specifically a carrier CC2 on the band B), but no content is sent. In this scenario, when transmission of 1T is scheduled on the band A, it may be determined, according to the foregoing method, that the associated band of the band A, namely, the band B, is not used, and band switching needs to be performed. Specifically, transmission of 1T on the band A and transmission of 1T on the band B are switched to transmission of 2T on the band A. The switch-from frequency domain resource is the band A and the band B, and the switch-to frequency domain resource is the band A. Because the band B is not used, and a quantity of uplink transmission chains on the switch-from band A is less than a quantity of uplink transmission chains on the switch-to band A, the switch-from band A may be used as a band on which a switching period is located.

Based on the foregoing method, when a same frequency domain resource (for example, a same band (or referred to as a shared band) or even a same carrier) exists in a switch-from frequency domain resource and a switch-to frequency domain resource, the communication apparatus can still effectively determine the switching period location when quantities of transmission chains on the same frequency domain resource obtained before and after switching are different, thereby reducing a waste of spectrum resources and improving spectrum resource utilization.

In some embodiments of this application, the frequency domain resource on which the switching period is located is determined in the scenario shown in FIG. 9, FIG. 10, or FIG. 11. However, because a frequency domain resource (for example, the band C in FIG. 9, the band A in FIG. 10, or the band A in FIG. 11) scheduled for uplink transmission (or carrying content of uplink transmission) does not change before and after switching, and a quantity of uplink transmission chains on a carrier in the frequency domain resource changes, it is unnecessary to reserve the switching period. In view of this, in a possible solution, when one frequency domain resource is scheduled and no other frequency domain resource is scheduled in parallel, if a quantity of uplink transmission chains on the frequency domain resource (or a carrier in the frequency domain resource) changes, switching may not be performed, that is, frequency domain resource switching is not performed. According to this method, in the scenario shown in FIG. 9, FIG. 10, or FIG. 11, the communication apparatus may not perform frequency domain resource switching, so that interruption of a use time period of a carrier on a carrier aggregation band can be avoided, thereby further reducing a waste of spectrum resources and improving spectrum resource utilization.

Based on the foregoing method, the communication apparatus can avoid some unnecessary frequency domain resource switching, to further reduce a waste of spectrum resources and improve spectrum resource utilization.

It should be noted that, a plurality of manners of determining the frequency domain resource on which the switching period is located are provided in the solution of the foregoing embodiments, and the manners of determining the frequency domain resource on which the switching period is located are described with reference to some specific scenarios (for example, the frequency domain resource switching scenarios shown in FIG. 7 to FIG. 11). However, these scenarios are merely used as examples for description, and do not constitute a limitation on a scenario to which the solution of this application is applicable.

In some embodiments of this application, a prerequisite for the terminal device and the network device to determine the frequency domain resource on which the switching period is located is that a time domain range or a time gap (gap) in which uplink transmission does not need to be performed or uplink transmission is not performed between information transmission in a first time unit scheduled by the network device and information transmission in a second time unit is less than a switching period needed by the terminal device. The time gap in which uplink transmission does not need to be performed or uplink transmission is not performed may be understood as a null symbol. Time gaps in which uplink transmission does not need to be performed or uplink transmission is not performed are consecutive null symbols. The first time unit is a last time unit before frequency domain resource switching, and the second time unit is a 1^{st} time unit after frequency domain resource switching. In some embodiments of this application, when determining that the switching scenario in which the M frequency domain resources are switched to the N frequency domain resources satisfies the foregoing prerequisite, the communication apparatus (the terminal device or the network device) may determine, by using the solution of determining the frequency domain resource on which the switching period is located that is provided in the foregoing embodiments, the frequency domain resource on which the switching period is located in the scenario.

In some embodiments of this application, in the frequency domain resource switching scenarios shown in FIG. 7 to FIG. 11, in a frequency domain resource switching scenario in which a role of the switch-from frequency domain resource and a role of the switch-to frequency domain resource are exchanged (that is, the original switch-from frequency domain resource is changed to the switch-to frequency domain resource, and the original switch-to frequency domain resource is changed to the switch-from frequency domain resource), the solution provided in the foregoing embodiments may still be used to determine the frequency domain resource on which the switching period is located. For a specific implementation, refer to related descriptions in the foregoing embodiments. Details are not described herein again.

For example, in the switching scenario shown in FIG. 7, a frequency domain resource switching scenario in which the role of the switch-from frequency domain resource and the role of the switch-to frequency domain resource are exchanged is as follows: Transmission of 1T on the band B and transmission of 1T on the band C are switched to transmission of 1T on the band A and transmission of 1T on the band B, and a priority of the band B is the highest. In this scenario, the frequency domain resource on which the switching period is located may also be determined in the method provided in the foregoing embodiments.

The foregoing describes the solution provided in embodiments of this application. It may be understood that, to implement the foregoing functions, the terminal device or the network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional units of the terminal device and the network device may be obtained through division based on the foregoing method example. For example, each functional unit may be obtained through division based on each corresponding function, or two or more functions may be integrated into one unit. The integrated unit may be implemented in a form of hardware, or may be implemented in a form of a software functional unit.

Based on the foregoing embodiments and a same technical concept, this application further provides a communication apparatus, configured to implement functions of the terminal device or the network device provided in embodiments of this application. As shown in FIG. 12, a communication apparatus 1200 may include a processing unit 1201 and a storage unit 1202. The processing unit 1201 is configured to control and manage an action of the communication apparatus 1200. The storage unit 1202 is configured to store program code and data of the communication apparatus 1200.

The processing unit 1201 may be a processor or a controller, such as a general-purpose central processing unit (central processing unit, CPU), a general-purpose processor, a digital signal processing (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit 1201 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The storage unit 1202 may be a memory.

The communication apparatus 1200 may be the terminal device or the network device in any one of the foregoing embodiments, or the communication apparatus 1200 may be an apparatus used in the terminal device or the network device in any one of the foregoing embodiments.

In an implementation, the communication apparatus 1200 may further include a sending unit 1203 and a receiving unit 1204. The sending unit 1203 and the receiving unit 1204 are interface circuits of the apparatus, and are configured to receive a signal from another apparatus. For example, when the apparatus is implemented in a manner of a chip, the sending unit 1203 is an interface circuit that is of the chip and that is configured to send a signal to another chip or apparatus, or the receiving unit 1204 is an interface circuit that is of the chip and that is configured to receive a signal from another chip or apparatus.

The communication apparatus 1200 may be configured to implement a function of the terminal device or the network device provided in embodiments of this application.

When the communication apparatus 1200 is configured to implement a function of the terminal device or the network device provided in embodiments of this application, the processing unit 1201 may be configured to: when switching from M frequency domain resources to N frequency domain resources, determine, from the M frequency domain resources and the N frequency domain resources, a frequency domain resource on which a switching period is located, where M and N are positive integers and a sum of M and N is greater than 2; and the switching period is a time period for switching from the M frequency domain resources to the N frequency domain resources, where the frequency domain resource on which the switching period is located satisfies at least one of the following: The frequency domain resource on which the switching period is located is a frequency domain resource that has no highest priority in frequency domain resources other than a first frequency domain resource in the M frequency domain resources and the N frequency domain resources, the frequency domain resource on which the switching period is located is the M frequency domain resources or the N frequency domain resources, the first frequency domain resource is a frequency domain resource included in the M frequency domain resources, and the first frequency domain resource is a frequency domain resource included in the N frequency domain resources; the frequency domain resource on which the switching period is located is a frequency domain resource that has no highest priority in a frequency domain resource belonging to a first specified type in the M frequency domain resources and the N frequency domain resources, and the frequency domain resource on which the switching period is located is the M frequency domain resources or the N frequency domain resources; the frequency domain resource on which the switching period is located is the M frequency domain resources or the N frequency domain resources, where the M frequency domain resources include the first frequency domain resource, and the N frequency domain resources include the first frequency domain resource; and the frequency domain resource on which the switching period is located is a frequency domain resource, other than a frequency domain resource on which a physical uplink control channel is located, in the M frequency domain resources or the N frequency domain resources.

The foregoing describes an example in which the communication apparatus 1200 performs some operation methods of the terminal device or the network device. It may be understood that, the processing unit 1201 may be further configured to perform other processing-related steps or operations that are performed by the terminal device or the network device in the foregoing method embodiments other than the foregoing processing. For details, refer to related descriptions in the foregoing method embodiments. Details are not described herein again.

It should be understood that, functional unit division in this embodiment of this application is an example, and is merely logical function division. In actual implementation, there may be another division manner. For example, the sending unit 1203 and the receiving unit 1204 may be combined into a transceiver unit. In addition, functional modules in embodiments of this application may be integrated into one processor, or may exist alone physically, or two or more modules may be integrated into one module. The integrated module may be implemented in a form of hardware, or may be implemented in a form of a software functional module.

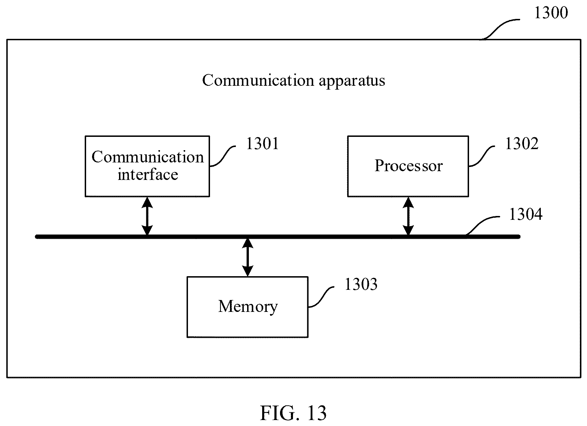

Based on the foregoing embodiments and a same technical concept, this application further provides a communication apparatus. As shown in FIG. 13, the communication apparatus may be an implementation of a hardware circuit of the communication apparatus shown in FIG. 12. The communication apparatus may be applicable to performing functions of the terminal device or the network device in the foregoing method embodiments. For ease of description, FIG. 13 shows only main components of the communication apparatus.

As shown in FIG. 13, the communication apparatus 1300 includes a communication interface 1301, at least one processor 1302, and a memory 1303. The processor 1302 is configured to execute instructions or a program stored in the memory 1303. When the instructions or the program stored in the memory 1303 is executed, the processor 1302 is configured to perform an operation performed by the processing unit 1201 in the foregoing embodiment, and the communication interface 1301 is configured to perform an operation performed by the sending unit 1203 and the receiving unit 1204 in the foregoing embodiment.

The memory 1303 is configured to store program instructions and/or data. The memory 1303 is coupled to the processor 1302. The coupling in this embodiment of this application may be an indirect coupling or a communication connection between apparatuses, units, or modules in an electrical form, a mechanical form, or another form, and is used for information exchange between the apparatuses, the units, or the modules. The processor 1302 may operate in collaboration with the memory 1303. The processor 1302 may execute the program instructions stored in the memory 1303. At least one of the at least one memory may be included in the processor.

In an implementation process, steps in the foregoing methods can be completed by using a hardware integrated logical circuit in the processor, or by using instructions in a form of software. The steps of the methods disclosed with reference to embodiments of this application may be performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be completed by using a hardware integrated logical circuit in the processor, or by using instructions in a form of software. The processor may be a general-purpose processor, a digital signal processing circuit (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that, the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that, the memory of the system and method described in this specification includes but is not limited to these and any memory of another proper type.

The communication interface 1301 is configured to communicate with another device by using a transmission medium, so that an apparatus in the communication apparatus 1300 may communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter; or the communication interface may be a transceiver integrating a transceiver function, or an interface circuit.

The communication apparatus 1300 may further include a communication line 1304. The communication interface 1301, the processor 1302, and the memory 1303 may be interconnected through the communication line 1304. The communication line 1304 may be a peripheral component interconnect (peripheral component interconnect, PCI for short) bus, an extended industry standard architecture (extended industry standard architecture, EISA for short) bus, or the like. The communication line 1304 may be classified into an address bus, a data bus, a control bus, and the like. For ease of representation, only one bold line represents the bus in FIG. 13, but this does not mean that there is only one bus or only one type of bus.

Based on the foregoing embodiments and a same technical concept, an embodiment of this application further provides a computer-readable storage medium. The computer-readable storage medium stores a computer program or instructions. When the computer program or the instructions are run on a communication apparatus, the communication apparatus is enabled to perform the method that is provided in the foregoing embodiments and that is applied to a terminal device or a network device.

Based on the foregoing embodiments and a same technical concept, an embodiment of this application further provides a computer program product. The computer program product includes a computer program or instructions. When the computer program or the instructions are executed by a communication apparatus, the method that is provided in the foregoing embodiments and that is applied to a terminal device or a network device is implemented.

Based on the foregoing embodiments and a same technical concept, an embodiment of this application further provides a chip system. The chip system includes a processor. The processor is coupled to a memory, and is configured to read and execute a software program stored in the memory, to implement the method that is provided in the foregoing embodiments and that is applied to a terminal device or a network device.

A person skilled in the art should understand that, embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
when switching from M frequency domain resources to N frequency domain resources, determining, from the M frequency domain resources and the N frequency domain resources, a frequency domain resource on which a switching period is located, wherein M and N are positive integers and a sum of M and N is greater than 2, and the switching period is a time period for switching from the M frequency domain resources to the N frequency domain resources, wherein
the frequency domain resource on which the switching period is located satisfies at least one of the following:
the frequency domain resource on which the switching period is located is a frequency domain resource that has no highest priority in frequency domain resources other than a first frequency domain resource in the M frequency domain resources and the N frequency domain resources, the frequency domain resource on which the switching period is located is the M frequency domain resources or the N frequency domain resources, the first frequency domain resource is a frequency domain resource comprised in the M frequency domain resources, and the first frequency domain resource is a frequency domain resource comprised in the N frequency domain resources;
the frequency domain resource on which the switching period is located is a frequency domain resource that has no highest priority in frequency domain resources belonging to a first specified type in the M frequency domain resources and the N frequency domain resources, and the frequency domain resource on which the switching period is located is the M frequency domain resources or the N frequency domain resources;
the frequency domain resource on which the switching period is located is the M frequency domain resources or the N frequency domain resources, wherein the M frequency domain resources comprise the first frequency domain resource, and the N frequency domain resources comprise the first frequency domain resource; and
the frequency domain resource on which the switching period is located is a frequency domain resource, other than a frequency domain resource on which a physical uplink control channel is located, in the M frequency domain resources or the N frequency domain resources.

2. The method according to claim 1, wherein the first specified type comprises at least one of the following:
uplink transmission is scheduled, and uplink transmission is performed on a frequency domain resource at a specified location in a scheduled frequency domain resource;
a physical uplink control channel does not exist/is not comprised; and
no associated band is comprised.

3. The method according to claim 1 or 2, wherein the M frequency domain resources are switch-from frequency domain resources, and the N frequency domain resources are switch-to frequency domain resources;
that the frequency domain resource on which the switching period is located is the M frequency domain resources is specifically: the frequency domain resource on which the switching period is located is the switch-from frequency domain resources; and
that the frequency domain resource on which the switching period is located is the N frequency domain resources is specifically: the frequency domain resource on which the switching period is located is the switch-to frequency domain resources.

4. The method according to claim 3, wherein
when the frequency domain resource on which the switching period is located is the switch-to frequency domain resources, a priority of information carried on the first frequency domain resource in the M frequency domain resources is higher than a priority of information carried on the first frequency domain resource in the N frequency domain resources; or
when the frequency domain resource on which the switching period is located is the switch-from frequency domain resources, a priority of information carried on the first frequency domain resource in the N frequency domain resources is higher than a priority of information carried on the first frequency domain resource in the M frequency domain resources.

5. The method according to any one of claims 1 to 4, wherein
if the frequency domain resource on which the physical uplink control channel is located belongs to the M frequency domain resources, the frequency domain resource on which the switching period is located is the N frequency domain resources; or
if the frequency domain resource on which the physical uplink control channel is located belongs to the N frequency domain resources, the frequency domain resource on which the switching period is located is the M frequency domain resources.

6. The method according to any one of claims 1 to 5, wherein that the frequency domain resource on which the switching period is located is the M frequency domain resources or the N frequency domain resources specifically comprises:
if a quantity of uplink transmission chains or a quantity of scheduled ports on the M frequency domain resources is less than a quantity of uplink transmission chains or a quantity of scheduled ports on the N frequency domain resources, the frequency domain resource on which the switching period is located is the M frequency domain resources; or
if a quantity of uplink transmission chains or a quantity of scheduled ports on the N frequency domain resources is less than a quantity of uplink transmission chains or a quantity of scheduled ports on the M frequency domain resources, the frequency domain resource on which the switching period is located is the N frequency domain resources.

7. The method according to any one of claims 1 to 6, wherein in the M frequency domain resources and the N frequency domain resources, a priority of the first frequency domain resource is higher than a priority of another frequency domain resource.

8. The method according to any one of claims 1 to 7, wherein
when a second frequency domain resource is in an in-band carrier aggregation state, the second frequency domain resource is configured with no associated band, or an associated band of the second frequency domain resource is not used, wherein the second frequency domain resource belongs to the M frequency domain resources or the N frequency domain resources.

9. The method according to claim 8, wherein uplink transmission on two carriers in the second frequency domain resource is transmission corresponding to one uplink transmission chain or transmission on one port.

10. The method according to any one of claims 1 to 9, wherein
if a quantity of uplink transmission chains or a quantity of scheduled ports on a third frequency domain resource changes during switching from the M frequency domain resources to the N frequency domain resources, switching of the third frequency domain resource is not performed or there is no switching period on the third frequency domain resource, wherein the third frequency domain resource belongs to the M frequency domain resources and/or the N frequency domain resources.

11. The method according to claim 10, wherein when one port is scheduled on the third frequency domain resource for transmission, and there is no other scheduled frequency domain resource, the third frequency domain resource is configured with no associated band, or an associated band of the third frequency domain resource is not used.

12. A communication apparatus, comprising at least one processor, and a memory and a communication interface that are communicatively connected to the at least one processor, wherein
the communication interface is configured to: receive a signal from a communication apparatus other than the communication apparatus and transmit the signal to the processor, or send a signal from the processor to a communication apparatus other than the communication apparatus; and
the memory stores instructions that can be executed by the at least one processor, and the at least one processor executes the instructions stored in the memory, to enable the communication apparatus to perform the method according to any one of claims 1 to 11.

13. A communication apparatus, comprising a module configured to perform the method according to any one of claims 1 to 11.

14. A computer-readable storage medium, wherein the storage medium stores a computer program or instructions; and when the computer program or the instructions are run on a communication apparatus, the communication apparatus is enabled to perform the method according to any one of claims 1 to 11.

15. A computer program product, wherein the computer program product comprises a computer program or instructions; and when the computer program or the instructions are executed by a communication apparatus, the method according to any one of claims 1 to 11 is implemented.
